# EUROPÄISCHE PATENTSCHRIFT

(11) **EP 4 015 173 B1**
(45) Veröffentlichungstag und Bekanntmachung des Hinweises auf die Patenterteilung: **06.09.2023**
(21) Anmeldenummer: 20216133.7
(22) Anmeldetag: 21.12.2020
(51) Int. Cl.: B27N 1/02, B27N 3/00

(54) **ERHÖHUNG DER REAKTIVITÄT VON ISOCYANATKLEBSTOFFEN DURCH AMMONIUMVERBINDUNGEN**
INCREASING THE REACTIVITY OF ISOCYANATE ADHESIVES BY AMMONIUM COMPOUNDS
AUGMENTATION DE LA RÉACTIVITÉ DES ADHÉSIFS ISOCYANATE À L'AIDE DES COMPOSÉS D'AMMONIUM

(43) Veröffentlichungstag der Anmeldung: 22.06.2022
(73) Patentinhaber: Georg-August-Universität Göttingen, 37073 Göttingen (DE)
(72) Erfinder: MAI, Carsten, 37075 Göttingen (DE); BRINKER, Sascha, 37120 Bovenden (DE)
(74) Vertreter: Wichmann, Hendrik

(56) Entgegenhaltungen:
- WO-A1-2016/156053
- DE-A1-102015 210 569

## Beschreibung

Die vorliegende Erfindung betrifft ein Verfahren zur Herstellung von Holzwerkstoffen, insbesondere umfassend die Schritte des In-Kontakt-Bringens von Lignocellulose-enthaltendem Material mit einem Bindemittelsystem und Aushärten des Bindemittels, wobei das Lignocellulose-enthaltende Material und das Bindemittelsystem wie in den Ansprüchen definiert ist.

### Stand der Technik

In Deutschland allein werden 10,5 Mio m³/Jahr Holzwerkstoffe produziert, davon sind 53% Spanplatten, 34% Faserplatten, 11% OSB-Platten und 2% Sperrholz, d.h. dass ca. 6 Mio m³/Jahr Spanplatten in Deutschland hergestellt werden. In Europa (ohne Russland und Türkei) werden ca. 47 Mio m³/Jahr Holzwerkstoffe hergestellt, davon sind 60% Spanplatten, 23% MDF, 7% OSB, 6% Sperrholz, 4% Dämmplatten.

Spanplatten, auch oft als Flachpressplatten bezeichnet, bestehen aus beleimten Spänen, welche bevorzugt unterschiedlich groß sind, wobei die Späne in zumeist drei bis fünf Schichten zu Mehrschichtplatten verpresst werden. Die äußeren Schichten bestehen dabei bevorzugt aus feinerem Spanmaterial. Da der massive Holzverbund aufgehoben ist, haben diese Platten in Richtung der Plattenebene, also Länge und Breite der Platte, nahezu die gleichen Quell- und Schwindeigenschaften, allerdings auch wesentlich geringere Festigkeiten als Vollholz. Spanplatten sind bevorzugt wie in der DIN EN 309 definiert.

Faserplatten werden aus Holz, Sägenebenprodukten oder Resthölzern, aber auch aus anderen holzfaserhaltigen Pflanzen wie Flachs oder Raps hergestellt. Allen Produkten ist gemeinsam, dass das Holz bis hin zur Holzfaser, Faserbündeln oder Faserbruchstücken aufgeschlossen wird. Der strukturelle Zusammenhalt beruht im Wesentlichen auf der Verfilzung der Holzfasern und ihren holzeigenen Bindekräften, es können aber auch Klebstoffe als Bindemittel eingesetzt werden.

Sperrholz ist ein Holzwerkstoff mit hoher Festigkeit und Formstabilität mit Anwendungen u. a. im Bau und der Möbelindustrie. Es besteht aus mindestens drei Holzlagen, deren Faserverlauf unter einem Winkel von 90° verleimt und gepresst wird. Dadurch werden richtungsgebundene Werkstoffeigenschaften wie z. B. das Quell- und Schwindverhalten über die Plattenebene homogenisiert, der entstandene Werkstoff "arbeitet" im Gegensatz zu Massivholz nicht mehr nennenswert, das Holz ist "abgesperrt". Durch die Art, Anzahl und Anordnung der Holzlagen ergeben sich der Plattenaufbau und seine spezifischen Festigkeitseigenschaften.

In der Holzwerkstoffindustrie werden zur Herstellung von Holzwerkstoffen (Faserplatten, Spanplatten, Dämmstoffe) neben Kondensationsharzen wie Harnstoff-Formaldehyd (UF), Melamin-Harnstoff-Formaldehyd (MUF) und Phenol-Formaldehyd (PF) auch Isocyanatbindemittel eingesetzt. Diese werden einerseits vor allem für den Einsatz im Feuchtbereich (z.B. Spanplatten nach EN 312-5 bzw. 7), andererseits auch für "formaldehydfrei" verleimte Platten verwendet. Auch bei schwer zu verleimenden Einjahrespflanzen, wie z.B. Stroh oder Bagasse, kommen sie zur Anwendung.

Ein Vorteil von Isocyanatklebstoffen, d.h. Bindemitteln auf der Basis von Isocyanatgruppen-enthaltenden Komponenten, wie z.B. dem polymeren Diphenylmethandiisocyanat (PMDI), ist das gute Benetzungsverhalten von Holzoberflächen und das gute Eindringvermögen im Vergleich zu wässrigen Amino- oder Phenolkondensationsharzen.

Ein weiterer Vorteil von Isocyanat-Bindemitteln gegenüber Formaldehydharzen ist, dass sie keine Formaldehydemissionen haben. Zusätzlich sind sie feuchtigkeitsbeständig, somit reduziert sich der Einsatz von Paraffinen und die Produkte können sowohl im Außenbereich wie im Feuchtbereich angewendet werden.

Demgegenüber stellt die relativ geringe Reaktivität der Isocyanatklebstoffe einen großen Nachteil dar. Bei der Verwendung von PMDI als Bindemittel für die Herstellung von Holzwerkstoffen wie Span- und Faserplatten oder "Oriented Strandboards" (OSB) wird deshalb bei Verwendung von PMDI eine deutlich geringere Maschinengeschwindigkeit der Pressen gefahren. Ein Nachteil von Isocyanatharzen im Vergleich zu Formaldehydharzen sind daher die erhöhten Kosten. Zwar wird aufgrund des besseren Benetzungsverhaltens die Menge an Bindemittel bei Verwendung von Isocyanatklebstoffen verringert, insgesamt ist aber deren Einsatz immer noch teurer.

Als Bindemittel für Holzwerkstoffe wird das entsprechende Isocyanat (PMDI) alleine, ohne Reaktionspartner mit Amino- oder Hydroxylgruppe eingesetzt. Das eigentliche Bindemittel nach der Aushärtung ist ein Polyadditionsprodukt, das sich aus einem Isocyanat (Di-, Polyisocyanat) und einer Aminoverbindung (Di-, Polyamin) bildet (nachfolgend dargestellt).

Da bei der Verklebung mittels Isocyanatklebstoff ausschließlich das Isocyanat eingesetzt wird, müssen daraus Aminogruppen durch Reaktion mit Wasser entstehen. Dies geschieht durch Zugabe von Wasser zum Klebstoffsystem, bzw. durch gebundenes Wasser der Holzspäne oder -fasern. Die Addition von Wasser an eine Isocyanatgruppe führt zunächst zur Bildung einer Carbaminsäuregruppe, die, aufgrund ihrer geringen Stabilität, Kohlendioxid abspaltet und so eine Aminogruppe freisetzt (nachfolgend dargestellt).

Die nachstehend gezeigte Additionsreaktion erfordert eine relativ hohe Aktivierungsenergie, die zu einer Verlangsamung der Reaktionsgeschwindigkeit des Gesamtprozesses führt.

Im Stand der Technik wird auch häufig die Verwendung von Polyurethan-Klebstoffen beschrieben. Hierbei werden Polyole mit Isocyanaten umgesetzt. Das erfindungsgemäße Verfahren bezieht derartige Polyurethan-Klebstoffe nicht mit ein. Lediglich die in der Natur vorkommenden aromatischen Polyole, d.h. Lignine und Tannine, können erfindungsgemäß Polyurethanbindungen -soweit diese stabil sind unter den Härtungsbedingungen- ausbilden. Dieser Ansatz unterscheidet sich aber grundsätzlich von der üblichen Verwendung von Polyolen (d.h. Hydroxygruppenenthaltende Komponenten) zur Bildung von Polyurethanen. Das erfindungsgemäße Verfahren ist somit dadurch gekennzeichnet, dass nur das Lignocellulose-enthaltende Material und optional Lignine und/oder Tannine als Hydroxygruppe-enthaltende Komponente(n) in dem Verfahren verwendet bzw. eingesetzt werden. Falls ein natürliches, Lignocellulose-enthaltendes Material, außer Ligninen und Tanninen weitere Polyole enthalten würde, so wäre die Verwendungen des Materials, das diese Komponenten enthält, nicht ausgeschlossen, diese Komponenten werden aber nicht aktiv im Verfahren, z.B. bei der Bereitstellung des Lignocellulose-enthaltenden Materials oder als Teil des Bindemittelsystems, zugesetzt.

Ein Verfahren zur Herstellung von Verbundwerkstoffen mit minimierter Formaldehydemission wird von der DE19522951A1 (1994) beschrieben. Hierbei werden Werkstoffteile mit einem wäßrigen formaldehydhaltigen vorkondensierten Harz imprägniert. Als Formaldehydfänger sind Ammoniumcarbonat und PMDI in einer Liste von Verbindungen erwähnt. Der Formaldehydfänger wird hierbei in kleinen Mengen von ca. 1-10 Gew.-%, bezogen auf die Festharzmenge, und nicht als Bindemittel, eingesetzt. Um die Wirkung des Formaldehydfängers sicherzustellen, fügt man vorzugsweise einen Katalysator zu, der in der Lage ist, die thermische Zersetzung des Formaldehydfängers und/oder die Entfernung des freigesetzten Formaldehyds zu erleichtern und/oder das Aushärten des Formaldehydharzes zu beschleunigen. Geeignete Katalysatoren sind Ammoniumsalze, wie beispielsweise Ammoniumchlorid oder -sulfat oder Lewis-Säuren, u. a. bekannte, hierfür geeignete Katalysatoren.

DE 10 2015 210 569 A1 beschreibt ein Verfahren zur Erhöhung der Reaktivität von Isocyanatklebstoffen durch Amin-/Ammoniumverbindungen. Die Patentanmeldung offenbart die mögliche Verwendung einer sehr großen Gruppe an Amin-/Ammoniumverbindungen, das heißt Ammoniak an sich, sowie jegliche Verbindungen mit einer primären Aminogruppe; jegliche NH₄⁺-Salze; und jegliche primären Ammoniumsalzen. Die vorliegende Erfindung basiert auf der Erkenntnis, dass eine besonders gute Beschleunigung mit speziellen Ammoniumverbindungen und unter bestimmten Bedingungen erzielt werden können. Aber nicht nur die Beschleunigung wird verbessert, auch die Festigkeiten des Produkte werden erhöht. Insbesondere die Verwendung der im Stand der Technik bevorzugten Ammonium-Carbonate führt nicht zu hohen Festigkeiten.

DE10356767A1 beschreibt ein Verfahren zum Herstellen von Platten und Formkörpern auf Basis von Polyurethanbindemitteln. Für die Vernetzung des Polyurethangerüstes (inklusive Polyisocyanaten) kann auch die Trimerisierungsreaktion der Isocyanatgruppen mit sich selbst bzw. mit Urethan und Harnstoffgruppen zu Allophanat- bzw. Biuret-Gruppen erfolgen. Hierzu können Trimerisierungskatalysatoren verwendet werden, wie z.B. wird DABCO TMR-2 der Firma Air Products genannt, wobei es sich um in Ethylenglykol gelöste substituierte quaternäre Ammoniumsalze, ohne reaktive -NH₂ oder -NH₃-Gruppen, handelt. Diese-NH₂ (primäres Amin) oder -NH₃ (Ammonium)-Gruppen sind jedoch zur beschleunigten Aushärtung der Isocyanatgruppen-enthaltende Komponente gemäß dem Verfahren der vorliegenden Erfindung notwendig.

DE4229396 beschreibt die Verwendung von tertiären Aminen als Beschleuniger in einem Bindemittel auf Polyurethanbasis. Ammoniumsalze werden nicht vorgeschlagen.

DE2711958A1 (1977) beschreibt ein Verfahren zur Bindung oder Imprägnierung lignocellulosehaltiger Rohstoffe, mittels Polyphenyl-polymethylen-polyisocyanaten. Beim Verfahren können auch Katalysatoren mitverwendet werden, z.B. tertiäre Amine wie Triethylenamin, sekundäre Amine wie Dimethylamin, Metallverbindungen wie Zinn(II)-acetat oder auch stickstoffhaltige Basen wie Tetraalkylammoniumhydroxide oder Alkalihydroxide (NaOH). Diese Polyisocyanatgemische können auch in Verbindung mit üblichen Bindemitteln wie formaldehydhaltigen Bindemitteln oder Sulfitablaugen oder Tannine verwendet werden. Das Verfahren kann zur Herstellung von Holzwerkstoffen verwendet werden.

EP2062708 A2 beschreibt ein Verfahren zur Verminderung der Emission von gesättigten und ungesättigten Aldehyden aus Holzwerkstoffen. Die Aufgabe war es, Additive bereit zu stellen, zur Reduktion von Emissionen von VOCs und Formaldehyd. Dabei handelt es sich um Reduktionsmittel wie z.B. Formamidinsulfinsäure, Salze von H₂S₂O₄ (thionige Säure), wie z.B. Natriumdithionit, Ammoniumdithionit und Zinkthionit. Um den pH-Wert zu erhöhen wird u.a. Ammoniumhydroxid verwendet. Die Verwendung von Reduktionsmittel, insbesondere Salzen der dithionigen Säure ist im erfindungsgemäßen Verfahren weder notwendig noch wünschenswert. Insbesondere kann die Verwendung von Salzen der dithionigen Säure (MS₂O₄, wobei M für ein Metall oder Ammonium steht) zu der Bildung von unerwünschten, insbesondere korrosiven, Schwefelprodukten wie SO₂ oder schwefeliger Säure führen. Auch sind Oxidationsmittel im erfindungsgemäßen Verfahren weder notwendig noch wünschenswert.

EP2193899A1 und EP2644340A1 beschreiben die Verwendung von u.a. Ammoniumpersulfat als oxidativen Additionsmittel zur Reduktion der Emissionen von VOCs und Formaldehyd bei der Herstellung von Holzwerkstoffen. Zusätzlich werden auch Thionige-Salze als Reduktionsmittel beansprucht. Eine Anwendung zur beschleunigten Produktion von Holzwerkstoffen wird nicht beschrieben. Die Verwendung von Reduktionsmitteln oder Schwefel-enthaltende Verbindungen im Allgemeinen, insbesondere Salze der dithionigen Säure, Formamidinsulfinsäure oder eine Kombination aus Hydrogensulfitsalz und Sulfitsalz ist im erfindungsgemäßen Verfahren weder notwendig noch wünschenswert. Obwohl EP2062708 A2, EP2193899A1 und EP2644340A1 eine Vielzahl von Klebstoffen offenbart, darunter auch Klebstoffe auf der Basis von PMDI, so offenbaren die Dokumente weder die Verwendung eines Klebstoffs mit mindestens 50 Gew.-% PMDI, noch einen Klebstoff, der explizit keine Hydroxygruppe-enthaltende Komponente enthält. Diese Hydroxygruppe-enthaltende Komponente (z.B. ein Polyol) ist üblich bei der Aushärtung der Klebstoffe zu Polyurethanen.

DE102007038085 A1 beschreibt ein Verfahren zur Herstellung von harten Beschichtungssystemen auf Basis wässriger Polyurethandispersionen, dabei wird Ammoniak als eines von vielen Neutralisationsmitteln beschrieben. Das Dokument offenbart auch weder die Verwendung eines Klebstoffs mit mindestens 50 Gew.-% PMDI, noch einen Klebstoff, der explizit keine Hydroxygruppe-enthaltende Komponente enthält. Obwohl die grundsätzliche Möglichkeit der Verwendung von primären Aminen, welche in Wasser gelöst nicht zu Ammoniak zerfallen, für die Beschleunigung der Polymerisierung angesprochen ist, gibt es keinen Hinweis bezüglich der Anwendung von Ammoniumsalzen.

DE19959170 A1 beschreibt ein Verfahren zur Herstellung von wässrigen PolyurethanDispersionen als modifizierten Prepolymer Mixing Process (PMP), insbesondere von selbstemulgierbaren wässrigen Polyurethan-Harzen. PMP hat mechanische Nachteile aufgrund der mehr oder weniger unkontrollierbaren Reaktionskinetik. Zur Erzielung eines brauchbaren Eigenschaftsprofils werden große Mengen an niedermolekularen Diolen benötigt, was wiederum einen erhöhten Bedarf an hydrophilen Gruppen nach sich zieht. Bei Verwendung großer Mengen an hydrophilen Gruppen (Trialkylammoniumcarboxylat) zur Stabilisierung, treten im Stadium der Dispergierung des Polyurethan-Prepolymers Probleme auf. Das im Gleichgewicht vorliegende Trialkylamin (Neutralisationsmittel) beschleunigt die Isocyanat /Wasser-Reaktion extrem, wodurch ein Großteil der freien Isocyanat-Gruppen in kurzer Zeit verloren geht. Die Verarbeitungszeit des Polyurethan-Prepolymers zwischen Beginn der Dispergierung und dem Ende der Kettenverlängerung mit Polyaminen wird somit drastisch eingeschränkt. Beim Überschreiten der Verarbeitungszeit wird das Kettenverlängerungsmittel unter Umständen nicht mehr vollständig eingebaut. Neben tertiären Aminen wird u.a. auch Ammoniak als Neutralisierungs-Komponente verwendet, jedoch nicht zur Beschleunigung. Diese selbstemulgierbaren, wässrigen Polyurethan-Harze können im Baubereich als Bindemittel für einkomponentige und zweikomponentige Beschichtungen, Dichtstoffe, Klebstoffe, Lacke oder Membranen, Sportbodenbeläge und Versiegelungen für die Oberflächen von mineralischen Baustoffen wie Beton, Gips, Zement, sowie Glas, Holz, Papier, Metall oder Kunststoff eingesetzt werden. Die Anwendung zur Herstellung von Holzwerkstoffen und die Verkürzung der Press- und Produktionszeiten wird nicht beschrieben. Insbesondere betrifft die vorliegende Erfindung keine Polyurethanverbindungen, wie sie in DE19959170 A1 beschrieben sind.

Die DE19812751 A1 beschreibt eine lösemittelfreie Polyurethan-Dispersion, mit einem hohen Feststoff-Gehalt an Polyurethan-Polymer oder Füllstoffen sowie deren Verwendung im Baubereich für einkomponentige, isocyanat- und lösemittelfreie Beschichtungen, Dichtstoffe, Klebstoffe oder Membrane. Die Kettenverlängerung von Polyurethanen wird meist mit Wasser realisiert, dies führt aber zu Produkten mit geringerer Lagerstabilität und Reproduzierbarkeit. Als Neutralisations-Komponente werden Ammoniak und bevorzugt tertiäre Amine beschrieben. Verwendung der Polyurethan-Dispersion im Baubereich für einkomponentige, isocyanatfreie und lösemittelfreie Beschichtungen, Dichtstoffe, Klebstoffe, Lacke, oder Membranen für die Oberflächen von mineralischen Baustoffen, wie z. B. Beton, Gips, Zement, sowie Glas, Holz und Holzwerkstoffe, Papier, Metall und Kunststoff. Insbesondere betrifft die vorliegende Erfindung keine Polyurethanverbindungen, wie sie in DE19812751 A1 beschrieben sind.

WO2019038116 A1 offenbart die Verwendung von Ammoniak oder Ammoniakfreisetzenden Verbindungen wie Ammoniumcarbonat oder Diammoniumphosphat, besonders bevorzugt Ammoniumcarbonat als mögliche Beschleuniger innerhalb einer sehr großen Gruppe von unterschiedlichsten Beschleunigern die beispielsweise auch Metallkatalysatoren enthält. Die Relevanz des pH-Werts, beziehungsweise dessen negative Auswirkung auf eine unerwünschte Ammoniakfreisetzung wurde nicht erkannt, da ja die Beschleunigung mittels Ammoniak selbst vorgeschlagen ist. Zudem ist auch vorgesehen, den Beschleuniger als Feststoff, beziehungsweise ohne Verwendung von Lösungsmitteln oder Suspendiermitteln, einzusetzen.

WO2016156226 A1 offenbart die Verwendung von Ammoniumsulfat als Härter für Aminoplaste (UF-Harze). Ammoniumsulfat kann auch als Hilfsmittel in Mengen von bis zu 30 Gew.-% eingesetzt werden. In Isocyanat-Bindemitteln wird in dem Dokument immer eine Säure eingesetzt. Die widerspricht dem Prinzip der Beschleunigung, das dieser Erfindung zugrunde liegt und wird die Reaktion eher verzögern als beschleunigen. Diese Schrift legt nahe Ammoniumsulfat zur Beschleunigung der Reaktion zu nutzen, welches jedoch in der erfindungsgemäßen Anwendung zu keiner Beschleunigung der Reaktion geführt hat.

Im Hinblick auf die bisherigen Erkenntnisse besteht weiterhin ein großer Bedarf an geeigneten Verfahren zum Herstellen von Holzwerkstoffen, insbesondere an kostengünstigen Verfahren die eine hohe Produktionsgeschwindigkeit erlauben. Diese Aufgaben werden durch das erfindungsgemäße Verfahren gelöst.

### Zusammenfassung der Erfindung

Die Erfindung ermöglicht die Beschleunigung der Herstellung von Verbundwerkstoffen und insbesondere Holzwerkstoffen, OSB- und USB-Platten, Faserplatten, MDF, HDF, Dämmplatten und Dämmstoffe) mit Isocyanatbindemittel, durch die Verwendung von Komponenten, die mindestens zwei gegenüber Isocyanat reaktive Stickstoffwasserstoffatome aufweisen bzw. bilden, ausgewählt aus Ammoniumacetat und Ammoniumphosphaten.

DE 10 2015 210 569 A1 beschreibt die Verwendung von Ammoniumcarbonat und - hydrogencarbonat, die bei ca. 60°C vollständig in Ammoniak, Kohlenstoffdioxid und Wasser zerfallen. Das beim Zerfall freigesetzte Ammoniakgas führt zu einer beschleunigten Aushärtung des Isocyanatbindemittels.

Es hat sich jedoch gezeigt, dass die Beschleunigung der Reaktion mit Ammoniumcarbonaten einen Nachteil hat, nämlich werden keine sehr hohen Festigkeiten in Holzplatten erreicht, welche für bestimmte Anwendungen wünschenswert sind. Dieses Problem ließ sich nicht durch unterschiedliche Methoden beim Aufsprühen des Bindemittelsystems oder durch Anpassung der Ammoniumcarbonat- Konzentration lösen. Auch bei langen Presszeiten konnten die gewünschten Festigkeiten nicht erzielt werden. Bei Einsatz von Diammoniumhydrogenphosphat (DAP) und Ammoniumacetat (AA) wurde jedoch überraschenderweise gefunden, dass diese, falls sie im Bindemittelsystem gelöst vorliegend, jedoch erst bei sehr hohen Konzentrationen (größer 5 Mol/Liter), bevorzugt mindestens 9 Molar bei DAP, eine Beschleunigung der Reaktion bewirken und die gewünschte Festigkeit erzielen. Andere Ammoniumsalze wie Ammoniumchlorid oder Ammoniumnitrat zeigten hingegen keine Beschleunigung der Reaktion.

Es wurde somit auch gefunden, dass das Verhältnis der Ammoniumäquivalente zum Wassergehalt von Bedeutung ist, wobei die Verwendung von 5 Mol Ammoniumäquivalenten, bezogen auf eine Lösung des Beschleunigers (Komponente (b)) nicht ausreichend ist um eine effektive Beschleunigung zu bewirken. Es hat sich auch gezeigt, dass nicht nur die ideale Menge an Wasser (6,6% bezogen auf das Isocyanat) berücksichtigt werden darf, es muss auch die freie Beweglichkeit der Moleküle berücksichtigt werden, sodass die tatsächliche Menge an Wasser höher gewählt werden muss, insbesondere 7-15%, bevorzugt etwa 10%.

Es wurde zudem überraschender Weise gefunden, dass für die Beschleunigung bei Spanplatten eine höhere Konzentration an Ammoniumäquivalenten notwendig ist im Vergleich zu Sperrhölzern. Bei Sperrhölzern ist bereits ab 2,0 oder 2,5 mol/l und 80°C eine Beschleunigung möglich. Bei Spanplatten kann eine Beschleunigung der Vernetzung ab Konzentrationen von 5 mol/l beobachtet werden. Nach DSC-Messungen reicht eine Reaktionstemperatur von mehr als 100°C aus.

Zudem hat sich gezeigt, dass sich sowohl der pH des Ammonium-Salzes selbst als auch der pH-Wert des Bindemittels auf die Beschleunigung und die resultierende Festigkeit auswirken.

Die vorliegende Erfindung ist somit entgegengesetzt zu den im Stand der Technik bevorzugten Ammonium-Carbonaten (DE102015210569A1 und WO2019038116A1), die lediglich experimentelle Daten zu Ammonium-Carbonaten enthalten. Die vorliegende Erfindung beruht somit nicht auf dem Konzept der Beschleunigung der Reaktion mittels freiem (gasförmigem) Ammoniak. Ohne sich darauf festzulegen, könnte die vorliegende Erfindung auf der Beschleunigung mittels gelöstem Ammoniak basieren.

Die Nutzung von Carbonaten führte zwar zu einer Beschleunigung der Reaktion, jedoch zu geringerer Festigkeit. Dagegen führte die Nutzung von DAP und AA in niedrigen Konzentrationen nicht zu einer Beschleunigung der Reaktion, insbesondere nicht bei Spanplatten.

Diammoniumphosphat und Ammoniumacetat zeigen bei hohen Konzentrationen eine starke Beschleunigung der Reaktion (mindestens 35%). Je nach Konzentration hat DAP einen pH Wert von 8,2, während AA einen Wert von 7,3 hat. Der pH-Einfluss konnte auch am Beispiel des Ammoniumchlorids gezeigt werden, welches aber keine ausreichende Beschleunigung bewirkte. So muss die erfindungsgemäße Komponente (b) aus einer erfindungsgemäßen Ammoniumverbindung in erfindungsgemäßer Menge und einem bei einem definierten pH-Wert vorliegen, um die erfindungsgemäßen Vorteile zu erzielen.

Durch die erfindungsgemäße Erhöhung der Reaktivität von Isocyanatklebstoffen / - bindemitteln können Holzwerkstoffe mit hohen Festigkeiten bei einer um 35% reduzierten Pressdauer erzeugt werden. Dies ermöglicht eine Steigerung der Produktion in bereits vorhandenen Anlagen zur Herstellung von Faser-, Span-, Dämm-, oder OSB-Platten. Die Beschleunigung wird durch die Nutzung bestimmter Ammoniumsalze in der Bindemittellösung bei pH-Werten größer 7, sowie einem bestimmten Ammoniumäquivalent-Verhältnis bezogen auf die verwendete Menge an Wasser, sowie einer bestimmten Menge an Wasser bezogen auf die Menge an Isocyanatgruppen-enthaltende Komponente(n) erreicht. Dabei ist es bevorzugt, die Salze in hohen Konzentrationen einzusetzen um zu einer um beispielsweise 35% reduzierten Pressdauer zu kommen. Bei AA sind äquivalente Konzentrationen von Ammoniumionen nötig wie bei DAP, um eine effektive Beschleunigung zu erreichen. Aufgrund der höheren Löslichkeit von AA ist es jedoch möglich eine noch bessere Beschleunigung zu erreichen. Ab sehr hohen AA-Konzentrationen über 9 Molar kann es jedoch zu einer Geruchsbelastung kommen. Mit dieser Methode konnten bei reduzierter Pressdauer gleiche Festigkeiten erreicht werden. Da das Prinzip der Beschleunigung mit Ammoniumsalzen bereits beschrieben ist, handelt sich um eine Auswahlerfindung.

Die Erfinder konnten mit den Substanzen AA und DAP (gelöst im Bindemittelsystem unter Zugabe von Wasser) eine Beschleunigung der Aushärtung des Isocyanatbindemittels bei Konzentrationen von 5-6% bezogen auf das Bindemittelsystem und einem pH größer 7 zeigen. Im Gegensatz zu den im Stand der Technik bevorzugten Ammoniumcarbonaten konnte jedoch ebenfalls eine hohe maximale Festigkeit erreicht werden. Dies ist überraschend, da (a) die Konzentration an Ammoniumsalzen (Carbonaten) laut StdT erst bei etwa 10% eine gute Beschleunigung bewirken, (b) laut Literatur davon auszugehen ist, dass Ammoniumcarbonate besser funktionieren und (c) der pH-Wert in der Literatur als nicht relevant angesehen wird, jedoch ein entscheidender Faktor für die Beschleunigung der Isocyanatreaktion ist.

Die Beschleunigung des Ausreagierens des isocyanathaltigen Bindemittels bei der Herstellung von Holzwerkstoffen ist ein wirtschaftlicher Vorteil. So können mehr Platten in der gleichen Zeit hergestellt werden, ohne größere Investitionen zu tätigen. Dies ist insbesondere relevant für Span- und Faserplattenhersteller. Zusätzlich könnte sich durch das bessere Ausreagieren eine Einsparung der Holzmengen und Bindemittelmengen ergeben, was für alle Hersteller von Interesse wäre.

Ein unerwarteter Vorteil der vorliegenden Erfindung zur Herstellung von Holzwerkstoffen ergibt sich daraus, dass das in dem Lignocellulose-enthaltenden (Ausgangs)material vorhandene Lignin Hydroxylgruppen enthält. Es wird angenommen, dass Isocyanate bei der Holzwerkstoffherstellung mit Hydroxylgruppen des Lignins reagieren. Die entstehenden Urethanbindungen scheinen aber bei höheren Temperaturen (120°C) und längerer Temperatureinwirkung nicht stabil zu sein (siehe Dunky und Niemz 2002). Durch die Verwendung von Ammoniumsalzen als Reaktionsbeschleuniger kann die Aushärtungstemperatur aber auf deutlich niedrigere Temperaturen gesenkt werden, sodass diese Urethanbildungen weniger zersetzt werden. Es könnten somit Materialien mit anderen Produkteigenschaften erzeugt werden.

Die vorliegende Erfindung könnte die Produktionskapazitäten von vorhandenen Werken erhöhen, ohne dass dazu große zusätzliche Investitionen notwendig wären.

Ammoniumacetat und Ammoniumphosphate können als Zusatz zum Isocyanatbindemittel-Wasser-Gemisch oder durch separates Aufsprühen auf die Holzfasern- und -späne, z.B. durch getrennte Düsen, eingesetzt werden. Sie beschleunigen das Ausreagieren bzw. Aushärten der Isocyanatbindemittel und reduzieren die benötigte Energie. So können geringere Temperaturen (z.B. 80°C) und insbesondere geringere Presszeiten verwendet werden.

Der Gegenstand der Erfindung ist die Beschleunigung des Gesamtprozesses, also der Bildung von Polyharnstoff, bei deutlich geringerer Temperatur (d.h. geringere Wärmemenge, die zur Aushärtung des Isocyanatklebstoffs notwendig ist) durch Zusatz von Ammoniumacetat und Ammoniumphosphaten. Das entstehende Bindemittel (Polymer) enthält Biuretgruppen und (Poly)-Harnstoffgruppen. Letztere entstehen, da nicht alle Isocyanatgruppen mit z.B. NH₃ reagieren, sondern auch einige nach dem herkömmlichen Mechanismus mit Aminogruppen reagieren, die aus Isocyanatgruppen freigesetzt werden. Der Anteil von Biuretgruppen und Polyharnstoffgruppen ist abhängig vom Verhältnis des eingesetzten Isocyanats zur Ammoniumverbindung.

Ammonium ist eine schwache Säure, die im chemischen Gleichgewicht mit Ammoniak steht (siehe unten). Der gasförmige Ammoniak ist stärker nukleophil als Wasser und reagiert damit schneller mit Isocyanatgruppen als mit Wasser unter Bildung eines Harnstoffderivats (siehe unten). Obwohl das Isocyanat (PMDI), wie oben beschrieben, sehr gut ins Holz eindringt, kann es leicht durch den gasförmigen Ammoniak erreicht werden. Die endständige Aminogruppe des Harnstoffderivats ist in der Lage, direkt mit einer weiteren Isocyanatgruppe unter Bildung einer Biuretgruppe zu reagieren (siehe unten). Die drei NH-Gruppen der Biuretstruktur können weiter mit einer Isocyanatgruppe reagieren, was zu einer Verzweigung bzw. Vernetzung führt.

Die Verwendung von Ammoniumcarbonat, oder Ammoniumcarbamat mit einem oder beiden Ammoniumcabonaten weist den weiteren Nachteil auf, dass ein starkes Schäumen der Klebstoffformulierung auftritt. Dies beruht auf der Freisetzung von CO₂ bei Zersetzung der Ammoniumcarbonate. Andererseits ergibt die Umsetzung des Isocyanats mit freigesetztem Ammoniak eine geringere Produktion von CO₂ durch Decarboxylierung des Isocyanats. Eine starke CO₂-Entwicklung kann für die Verwendung als Bindemittel für Holzwerkstoffe von Nachteil sein, weil so der Gasdruck innerhalb der Presse zunehmen und es beim Entspannen der Presse zu Spaltern kommen kann. Andererseits kann das Schäumen der Bindemittelformulierung auch von Vorteil sein, weil es die Herstellung geschäumter, leichter Holzwerkstoffe erlaubt.

Eine Ausführungsform der Erfindung betrifft daher ein Verfahren zur Herstellung von Holzwerkstoffen, insbesondere umfassend die Schritte des In-Kontakt-Bringens von Lignocellulose-enthaltendem Material mit einem Bindemittelsystem und Aushärten des Bindemittels, wobei das Lignocellulose-enthaltende Material und das Bindemittelsystem wie in den Ansprüchen definiert ist.

### Beschreibung der Figuren und chemischen Formeln

Die chemische Struktur von polymerem Diphenylmethandiisocyanat (PMDI) ist nachfolgend dargestellt:

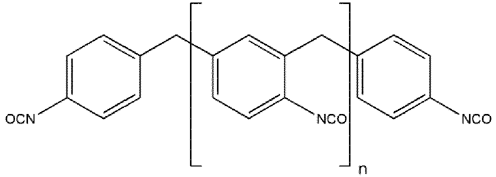

Die Polyaddition aus Diisocyanat und Diamin zur Bildung von reinem Polyharnstoff ohne Biuretgruppe (nicht erfindungsgemäß) ist nachfolgend dargestellt:

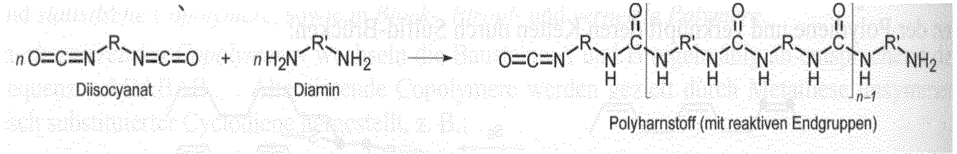

Die Addition von Wasser an Isocyanat und Bildung einer Aminogruppe ist nachfolgend dargestellt:

R-N=C=O + H₂O → R-N(H)-COOH → RNH₂ + CO₂

Die Säurewirkung des Ammoniums ist nachfolgend dargestellt:.

NH₄⁺ <==> NH₃ + H⁺

Die Addition von Ammoniak an Isocyanat unter Bildung eines Harnstoffderivats ist nachfolgend dargestellt:

R-N=C=O + NH₃ **→** R-NH-C(=O)-NH₂

Die Addition des Isocyanats an das Harnstoffderivat ist nachfolgend dargestellt:

R-NH-C(=O)-NH₂ + R'-N=C=O **→** R-NH-C(=O)-NH-C(=O)-NH-R'

**Figur 1****:** Daten aus Beispiel 1: Biegefestigkeiten [N/mm²] von EM4330, verschiedene Salzlösungen (2,5 mol/l) und pH Variationen; Beleimung 100g/Platte; Rohdichte 732 kg/m³; Pressdruck 1,5 N/mm².
**Figur 2****:** Daten aus Beispiel 2: Scherzugfestigkeiten [N/mm²] von EM4330, verschiedene Salzlösungen (2,5 mol/l) und pH Variationen; Beleimung 100g/Platte; Rohdichte 732 kg/m³; Pressdruck 1,5 N/mm².
**Figur 3****:** Daten aus Beispiel 3: Scherzugfestigkeiten [N/mm²] von EM4330 und verschiedenen kristallinen Salzen; Beleimung 100g/Platte; Rohdichte 732 kg/m³; Pressdruck 1,5 N/mm².
**Figur 4****:** Daten aus Beispiel 4: Biegefestigkeiten [N/mm²] von EM4352 umgesetzt mit Wasser, AA und DAP (5 mol/l); Beleimungsgrad 6%; Rohdichte 645 kg/m³; Zieldicke 15 mm; Presstemperatur 200°C; Pressdruck 190 bar mit Distanzleiste.
**Figur 5****:** Daten aus Beispiel 4: Biegefestigkeiten [N/mm²] von EM4352 umgesetzt mit Wasser, AA und DAP (9 mol/l); Beleimungsgrad 6%; Rohdichte 725 kg/m³; Zieldicke 15 mm; Presstemperatur 200°C; Pressdruck 190 bar mit Distanzleiste.
**Figur 6****:** Daten aus Beispiel 5: Querzugfestigkeiten V20 [N/mm²] von EM4352 umgesetzt mit Wasser, AA und DAP (5 mol/l); Beleimungsgrad 6%; Rohdichte 645 kg/m³; Zieldicke 15 mm; Presstemperatur 200°C; Pressdruck 190 bar mit Distanzleiste.
**Figur 7****:** Daten aus Beispiel 5: Querzugfestigkeiten V20 [N/mm²] von EM4352 umgesetzt mit Wasser, AA und DAP (9 mol/l); Beleimungsgrad 6%; Rohdichte 725 kg/m³; Zieldicke 15 mm; Presstemperatur 200°C; Pressdruck 190 bar mit Distanzleiste.
**Figuren 8-10****:** Einfluss des pH-Werts.

### Detaillierte Beschreibung der Erfindung

Die vorliegende Erfindung betrifft ein Verfahren zur Herstellung von Holzwerkstoffen, umfassend die Schritte, bevorzugt bestehend aus den Schritten:
(i) Bereitstellen von Lignocellulose-enthaltendem Material, enthaltend 5-40 Gew.-% Lignine und 15-95 Gew.-% Holocellulose;
(ii) In-Kontakt-Bringen des Materials aus Schritt (i) mit einem Bindemittelsystem, umfassend mindestens die folgenden Komponenten:
   - mindestens eine Isocyanatgruppen-enthaltende Komponente (a),
   - mindestens eine Komponente (b), ausgewählt aus der Gruppe bestehend aus Ammoniumacetat und Ammoniumphosphaten, und Mischungen davon, wobei das Bindemittelsystem Wasser enthält, und wobei die Komponente (b), bezogen auf ihre Ammoniumäquivalente, in einer ausreichend hohen Verfügbarkeit vorliegen müssen, was im Falle von Sperrholzplatten bei einer bevorzugt 2,0 oder 2,5 molaren und bei Spanplatten bei einer bevorzugt mindestens 6 molaren, Lösung in der verwendeten Menge an Wasser vorliegt und wobei sich die Komponente (b) bei 20°C in der verwendeten Menge an Wasser vollständig löst und auf einen pH-Wert von größer als 7 eingestellt wird; und
   - optional Lignine und/oder Tannine;
      wobei die Menge an Wasser 7-15 Gew.-%, bezogen auf die Gesamtmenge der Isocyanatgruppen-enthaltenden Komponente (a) beträgt;
      wobei das Bindemittelsystem die mindestens eine Isocyanatgruppen-enthaltende Komponente (a) in einer Menge von mindestens 50 Gew.-%, bezogen auf alle polymerisierbaren Komponenten des Bindemittelsystems, enthält;
      wobei bevorzugt nur das Lignocellulose-enthaltende Material und optional Lignine und/oder Tannine als Hydroxygruppe-enthaltende Komponente(n) in dem Verfahren verwendet werden,
      unter Erhalt einer Mischung; und
(iii) Thermisches, thermomechanisches oder mechanisches Aushärten der Mischung aus Schritt (ii), unter Erhalt eines Holzwerkstoffs.

In einer Ausführungsform ist der Holzwerkstoff eine Spanplatte oder Faserplatte und die Komponente (b) wird in einer mindestens 6 molaren Lösung eingesetzt. In einer anderen Ausführungsform ist die mindestens eine Komponente (b) ausgewählt aus Ammoniumacetat und Diammoniumhydrogenphosphat ((NH₄)₂HPO₄).

Grundsätzlich ist im Rahmen aller Ausführungsformen der Erfindung die Verwendung von Ammoniumacetat und jeglichen Ammoniumphosphaten, insbesondere (NH₄)H₂PO₄ (Ammoniumdihydrogenphosphat), (NH₄)₂HPO₄ (Diammoniumhydrogenphosphat), [NH₄PO₃]ₙ (Ammoniumpolyphosphat) und (NH₄)₃PO₄ (Triammoniumphosphat, auch "Ammoniumphosphat") und Mischungen davon, möglich, wobei Diammoniumhydrogenphosphat (Diammoniumphosphat) bevorzugt ist. In einer Ausführungsform wird der pH-Wert einer Lösung der verwendeten Menge an Komponente (b) in der verwendeten Menge an Wasser auf einen Bereich von 7-10 eingestellt, bevorzugt mit Natronlauge und/oder einer Mineralsäure, bevorzugt ohne Chlorid, insbesondere Schwefelsäure.

In einer Ausführungsform enthält das Bindemittelsystem keine Komponente aus der folgenden Gruppe: Ammoniak, Amine und zusätzliche Ammoniumverbindungen.

In einer Ausführungsform enthält das Bindemittelsystem keine weiteren Säuren.

In einer Ausführungsform liegt die Komponente (b) in dem Bindemittelsystem in einer Menge von 1-20 Gew.-%, bevorzugt 3-8 Gew.-%, weiter bevorzugt 4-7 Gew.-% vor.

In einer Ausführungsform enthält das Bindemittelsystem die mindestens eine Isocyanatgruppen-enthaltenden Komponente(n) (a) in einer Gesamtmenge von mindestens 80 Gew.-%, bevorzugt mindestens 90 Gew.-% oder 100 Gew.-%, bezogen auf alle polymerisierbaren Komponenten des Bindemittelsystems.

In einer Ausführungsform beträgt die Molarität der Ammoniumäquivalente der Komponente (b) mindestens 6 Mol, bzw. mindestens 8 Mol oder mindestens 9 Mol bezogen auf eine Lösung der Komponente (b) in der verwendeten Menge Wasser.

In einer Ausführungsform beträgt die Menge der mindestens einen Isocyanatgruppen-enthaltenden Komponente (a) bezogen auf das Lignocellulose-enthaltende Material 1-10 Gew.-%, bevorzugt 2-8 Gew.-%, weiter bevorzugt 3-8 Gew.-%.

In einer Ausführungsform wird das thermische, thermomechanische oder mechanische Aushärten der Mischung in Schritt (iii) bei Presszeiten in einer Heißpresse bei einer Temperatur von 80-220°C, bevorzugt 120-220°C und von weniger als 12 s/mm, bevorzugt weniger als 8 s/mm durchgeführt.

In einer Ausführungsform setzt die mindestens eine Komponente (b) unter den Aushärtungsbedingungen in Schritt (iii) keinen gasförmigen Ammoniak durch Zersetzung frei, sondern entstehender Ammoniak ist im Bindemittelsystem gelöst.

In einer Ausführungsform ist die Isocyanatgruppen-enthaltende Komponente eine Di- oder Polyisocyanat-Komponente, bevorzugt Diphenylmethandiisocyanat.

In einer Ausführungsform ist der Holzwerkstoff ausgewählt aus der Gruppe bestehend aus Faserplatten, Spanplatten, Dämmstoffen, Dämmplatten, Oriented Strandboards, Unoriented Strandboards, Furnieren, Sperrholz, Holzkompositwerkstoffen und Engineered Wood Products, insbesondere sind die Holzwerkstoffe mitteldichte Holzwerkstoffe mit einer Dichte von 550 kg/m³ bis 800 kg/m³, ultraleichte Holzwerkstoffe mit einer Dichte von unter 550 kg/m³ und hochdichte Holzwerkstoffe mit einer Dichte von größer als 800 kg/m³.

In einer Ausführungsform werden die Isocyanatgruppen-enthaltenden Komponente und die mindestens eine Komponente (b) des Bindemittelsystems mittels Düsen getrennt voneinander aufgesprüht, und/oder wobei in Schritt (i) wird ein oder mehrere Zusatzstoffe in das Lignocellulose-enthaltende Material eingemischt, bevor es in Kontakt mit dem Bindemittelsystem gebracht wird.

Bevorzugterweise ist das Bindemittelsystem eine Lösung und keine Suspension, enthält also keine Feststoffe.

Die maximale Löslichkeit von Ammoniumacetat in Wasser beträgt 1480 g/L. Die maximale Löslichkeit bestimmt dann die maximal erreichbare Molarität. Bevorzugt wird eine weniger als 20 molare, oder weniger als 15 molare, AA-Lösung verwendet.

Das erfindungsgemäße Verfahren umfasst die Schritte (i)-(iii). Es umfasst bevorzugt keine zusätzlichen Schritte, in denen zusätzlich zu dem Bindemittelsystem aus Schritt (ii) weitere Komponenten zugegeben werden. Beispielsweise kann nicht zwischen Schritt (i) und (ii) ein Schritt eingefügt werden, bei dem das Lignocellulose-enthaltende Material mit weiteren Komponenten versetzt wird. Somit wird in Schritt (iii) nur das Lignocellulose-enthaltende Material mit dem Bindemittelsystem ausgehärtet.

Das Lignocellulose-enthaltende Material kann wie in bekannten Verfahren bereitgestellt und mit dem Bindemittelsystem in Kontakt gebracht werden. Dies erfolgt üblicherweise bei Umgebungstemperatur.

Das Lignocellulose-enthaltendem Material enthält 5-60 Gew.-% Lignine und 15-95 Gew.-% Holocellulose. Der Holocellulosegehalt ist bezogen auf das Gesamtgewicht des Lignocellulose-enthaltenden Materials. Der Mindestgehalt an Holocellulose ist bevorzugt höher als 15%, z.B. 20 Gew.-% oder 25 Gew.-%. Bevorzugt beträgt der Holocellulosegehalt 30-95 Gew.-%, 40-95 Gew.-%, oder bevorzugt 60-95 Gew.-%, oder 80-95 Gew.-%.

Der Ligningehalt des Lignocellulose-enthaltenden Materials beträgt 5-60 Gew.-%, bezogen auf das Gesamtgewicht des Lignocellulose-enthaltenden Materials. Der Mindestgehalt an Lignin ist bevorzugt höher als 5 Gew.-%, z.B. 15-60 Gew.-%, oder 20-50 Gew.-%, oder 20-40 Gew-%. Im Allgemeinen steigt die Stabilität des Lignocellulose-enthaltenden Materials und damit des Holzwerkstoffs mit dem Ligningehalt an. Je nach Anwendung des Holzwerkstoffs kann es daher wünschenswert sein, ein Lignocellulose-enthaltendes Material mit höherem Ligningehalt zu wählen, oder Lignine/Tannine als Bindemittelkomponente zuzusetzen.

Die Bestimmung des Holocellulosegehalts erfolgt bevorzugt mittels des Verfahrens beschrieben in Wise LE, Murphy, M, D'Addies AA (1946) "Chlorite holocellulose, its fractionation and bearing on summative wood analysis and on studies on the hemicellulose" (Paper Trade Journal 122/29: 11-19). Hierbei wird die Holocellulose erhalten, indem die Ligninkomponente der Ligno-Cellulose durch Zugabe von Natriumchlorid und Essigsäure oxidativ in wässriger Lösung entfernt wird, der Rückstand abfiltriert, getrocknet und gewogen wird.

Wichtige Parameter des Messverfahrens werden nachfolgend kurz beschrieben:
- Das Wasserbad wird auf 80°C eingestellt. Während der Aufwärmphase werden je 2 g des extraktfreien Holzes, d.h. des Zellwandmaterials nach Extraktion mit polaren und unpolaren Lösungsmitteln, in 250 ml Erlenmeyerkolben eingewogen, 80 ml demineralisiertes Wasser zugeben und verrührt.
- Zu dieser Suspension werden 0.25 ml Essigsäure und 0.75 g Natriumchlorit gegeben. Anschließend werden die Kolben für 1 h in das 80°C Wasserbad gegeben.
- Diese Abfolge muss 4 x (3 Wiederholungen) erfolgen.
- Anschließend werden die Suspensionen in Eiswasser gekühlt und abfiltriert. Der Filterrückstand wird mit 100 ml Eiswasser und mit 25 ml Aceton gewaschen.
- Der Rückstand wird bei 103°C im Trockenschrank getrocknet.

In einer Ausführungsform ist das Lignocellulose-enthaltende Material Holz, insbesondere unbehandeltes Holz, das aus der Natur gewonnen ist, wie Holzspäne, oder Holzfasern. Bevorzugt sind Spanplatten, Faserplatten und Sperrhölzer. Im Zusammenhang mit der vorliegenden Erfindung wird der Begriff "Holz" wie folgt verstanden: Holz bezeichnet das harte Gewebe der Sprossachsen (Stamm, Äste und Zweige) von Bäumen und Sträuchern. Kennzeichnend ist hierbei die Einlagerung von Lignin in die Zellwand. In einer weitergehenden Definition wird Holz daher auch als lignifiziertes (verholztes) pflanzliches Gewebe begriffen.

In einer anderen Ausführungsform ist das Material Recycling-Holz, das bereits ausgehärtetes Bindemittel enthält. Dieses bereits ausgehärtete Bindemittel verhält sich im erfindungsgemäßen Verfahren im Wesentlichen passiv. Das hierin verwendete Recycling-Holz enthält maximal 20 Gew.-% ausgehärtetes Bindemittel und kein unausgehärtetes Bindemittel In einer Ausführungsform wird unbehandeltes Holz oder Recycling-Holz verwendet, wobei dem Lignocellulose-enthaltendem Material in Schritt (i) keine weiteren Chemikalien zugesetzt werden. Das bedeutet, dass das unbehandelte Holz oder Recycling-Holz lediglich auf die gewünschte Größe/Form gebracht wird und in Schritt (ii) mit dem Bindemittelsystem versetzt wird.

In Schritt (i) des Verfahrens können ein oder mehrere Zusatzstoffe in das Lignocellulose-enthaltende Material eingemischt werden, bevor es in Kontakt mit dem Bindemittelsystem gebracht wird. Beispielsweise können Füllstoffe, insbesondere leichte Polymerkügelchen, Popkorn, Blähton, Blähgraphit, Vermikulit, Montmorillonit und andere (leichte) Mineralien eingebracht werden.

Den Ligningehalt erhält man durch Hydrolyse des Lignocellulose-enthaltenden Materials durch Kochen mit 72%iger Schwefelsäure. Das Lignin bleibt dabei unlöslich in Wasser zurück, wird filtriert, getrocknet und gewogen. Bevorzugt wird der Ligningehalt gemäß T 222 om-98 (Reaffirmed standard, 1998, TAPPI) durchgeführt.

Bevorzugte Lignocellulose-haltige Materialien, die die erforderliche Menge an Ligninen und Cellulose aufweisen, sind Nadelholz; Laubholz, bevorzugt Birkenholz, Buchenholz; Weizenstroh; Maisspindeln; Bagasse, Hanfschäben, Großgräser wie Miscanthus; bevorzugt Nadelholz, wie Fichte, Kiefer, Tanne und Douglasie; Birkenholz; und Buchenholz.

In einer Ausführungsform weist das Lignocellulose-enthaltende Material eine Formaldehydemission von höchstens 6 mg/m²h, gemessen mit dem Gasanalyseverfahren EN 717-2 über 4 Stunden bei einer Temperatur von 60°C an einem Probenkörper mit den Maßen 400 mm × 50 mm, auf. Weiter bevorzugt beträgt die Formaldehydemission höchstens 3,5 mg/m²h oder höchstens 2 mg/m²h, weiter bevorzugt höchstens 1 mg/m²h, oder höchstens 0,5 mg/m²h, weiter bevorzugt höchstens 0,2 mg/m²h oder 0,1 mg/m²h, auf. Im Allgemeinen ist es unter Gesundheitsgesichtspunkten wünschenswert, dass die Formaldehydemission möglichst gering ist, wenn der Holzwerkstoff für den Einsatz in geschlossenen Räumen gedacht ist. Unbehandeltes Holz weist eine Formaldehydemission von höchstens 1 mg/m²h auf. Im Rahmen der vorliegenden Erfindung wird daher definiert, dass "unbehandeltes Holz" die Bedingung "höchstens 1 mg/m²h Formaldehydemission" erfüllt.

Zur Bestimmung der Formaldehydemission wird bevorzugt die Methode EN 717-2 verwendet. Hierbei wird bei 60 °C über vier Stunden gemessen und die FormaldehydEmission in mg/m²h angegeben und bezieht sich auf die nicht abgedichtete Gesamtoberfläche der Probenkörper (400 mm × 50 mm). Bei Verwendung von kleinen Spänen werden zunächst gleichgroße Probekörper hergestellt (bezüglich des Messverfahrens, siehe: Holzwerkstoffe - Bestimmung der Formaldehydabgabe - Teil 2: Formaldehydabgabe nach der Gasanalyse-Methode; Deutsche Fassung EN 717-2:1994).

Der Formaldehydgehalt (Gegensatz zu Emission) wird nach der Perforatormethode ermittelt (EN 120:1992).

In Schritt (ii) des Verfahrens werden die Komponenten (a), (b) und optional weitere, bevorzugt flüssige oder im Bindemittelsystem lösliche, Komponenten/Zusatzstoffe verwendet. Die Gesamtheit dieser, bevorzugt gelösten, Komponenten wird als "Bindemittelsystem" bezeichnet.

Erfindungsgemäß ist es möglich, die Komponenten des Bindemittelsystems zusammen oder getrennt voneinander aufzutragen. Die "weiteren Komponenten" werden bevorzugt als Gemisch mit mindestens einer der Komponenten (a)-(b) eingesetzt. "Weitere Komponenten" sind nicht notwendig, können aber enthalten sein. In einer Ausführungsform werden keine weiteren Komponenten verwendet. In einer Ausführungsform werden keine Schwefel-enthaltenden Komponenten in dem Bindemittelsystem verwendet bzw. es werden keine Schwefel-enthaltenden Komponenten in Kontakt mit dem Lignocellulose-enthaltendem Material gebracht, d.h. diesem auch nicht in Schritt (i) zugesetzt.

Außer Lignin und Tannin werden erfindungsgemäß keine Komponenten mit einer oder mehreren Hydoxygruppe(n) verwendet. Insbesondere werden dem unbehandelten Holz oder dem Recycling-Holz keine Polyole zugesetzt. Somit entstehen während des Aushärtungsschrittes nur aromatische Polyurethane, insbesondere Polyurethane auf der Basis von im Holz natürlich vorkommenden Polyolen, d.h. Lignine und Tannine.

Zudem werden bevorzugt keine Komponenten mit einer oder mehreren Carbonsäuregruppe(n), insbesondere keine Aminocarbonsäuren verwendet.

Somit werden in Schritt (ii) bevorzugt ausschließlich die aufgezählten Komponenten mit dem Lignocellulose-enthaltenden Material, in Kontakt gebracht, d.h. es werden ausschließlich diese Komponenten als Bindemittelsystem verwendet. Weiter bevorzugt wird dieses Bindemittelsystem mit dem Lignocellulose-enthaltenden Material in Kontakt gebracht und keine weiteren Materialien/Komponenten verwendet.

Weiter bevorzugt, wird gemäß der vorliegenden Erfindung überhaupt keine Verbindung mit Hydroxygruppe(n) als Komponente des Bindemittels verwendet, d.h. es werden auch keine Lignine oder Tannine zugesetzt. Wenn keine Lignine oder Tannine zugesetzt wird, ist lediglich Lignin und Tannin vorhanden, das bereits in dem Lignocellulose-enthaltenden Material vorhanden war. In einer Ausführungsform wird unbehandeltes Holz verwendet, sodass die Lignine oder Tannine nur natürlicherweise enthalten sind. Falls ein verwendetes Recycling-Holz geringe Mengen an Polyolen enthält ist die Verwendung des Holzes nicht ausgeschlossen, allerdings wird erfindungsgemäß in keinem Schritt des Verfahrens ein Polyol aktiv zugesetzt.

Darüberhinaus werden bevorzugt nicht Ammoniumdithionit oder andere reduzierende Verbindungen als die Komponenten in Schritt (ii) verwendet.

Insbesondere umfasst das erfindungsgemäße Verfahren bevorzugt keinen Schritt der Harzvorimprägnierung, wie eine Vorimprägnierung mit Formaldehydharzen vor dem In-Kontakt-Bringen des Bindemittelsystems mit dem Lignocellulose-enthaltendem Material.

Das hierin verwendete Bindemittelsystem enthält maximal 20 Gew.-% Formaldehydharz, insbesondere ist es frei von Formaldehydharz, wie z.B. UF (Harnstoff-Formaldehydharz-Leim), MUF (Melamin-Urea-Formaldehyd-Leim), MUPF (Melamin-Urea-Phenol-Formaldehyd-Leim) und MF (Melamin-Formaldehyd-Kondensationsharze), bzw. deren ungehärteten Ausgangsmaterialien, die beispielsweise in DE19522951 A1 Anwendung finden.

Nach dem Aushärten des Bindemittelsystems enthält der Holzwerkstoff das Bindemittel. Im Bindemittelsystem enthaltenes Wasser ist dann fast vollständig entfernt.

Das Bindemittel enthält ein Polyharnstoffderivat mit Biuretgruppen/Polyharnstoffstruktureinheiten/Biuretpolymer, gebildet aus mindestens der Isocyanatgruppen-enthaltenden Komponente und der Komponente (b), und gegebenenfalls aromatische Polyurethanstruktureinheiten auf der Basis von im Holz natürlich vorkommenden Polyolen oder den zugesetzten Ligninen und Tanninen.

Nach dem Härten, enthält der Holzwerkstoff bevorzugt 30-98 Gew.-% Lignocellulose-enthaltendes Material und 2-20 Gew.-% Bindemittel, davon bevorzugt bis zu 15 Gew.-% Isocyanat. Zudem können beispielsweise Holzschutzmittel, Brandschutzmittel, Emulgatoren, Streckmittel und/oder Hydrophobierungsmittel wie Paraffine im Bindemittelsystem enthalten sein.

Bevorzugt beträgt der Anteil des Lignocellulose-enthaltenden Materials und des Bindemittels im gehärteten Werkstoff von 70 Gew.-% bis 100 Gew.-%, bevorzugt von 80 Gew.-% bis 100 Gew.-%; weiter bevorzugt von 85 Gew.-% bis 100 Gew.-%, noch weiter bevorzugt von 90 Gew.-% bis 100 Gew.-%, oder 95 Gew.-% bis 100 Gew.-%. Beispielsweise enthält der Holzwerkstoff nur Lignocellulose-enthaltendes Material und Bindemittel, sowie optional Paraffin(e), wobei das Bindemittel bevorzugt nur aus den Komponenten (a), (b) und Wasser gebildet ist.

Weitere Komponenten werden bevorzugt in einer Gesamtmenge von 0-30 Gew.-%, bezogen auf das Bindemittel, bevorzugt 0-20 oder 0-10 Gew.-% verwendet.

Bevorzugt wird keine weitere, mit den anderen Komponenten des Bindemittelsystems polymerisierbare, Komponente verwendet. In einer Ausführungsform werden ausschließlich die spezifizierten Komponenten (a)-(b), d.h. keine zusätzlichen Komponenten, verwendet.

Die Isocyanatgruppen-enthaltende Komponente enthält mindestens zwei Isocyanatgruppen (NCO-Gruppen) und ist somit eine Di- oder Polyisocyanat-Komponente, bevorzugt Diphenylmethandiisocyanat.

In einer Ausführungsform wird Diphenylmethandiisocyanat als Isocyanatgruppen-enthaltenden Komponente verwendet.

Der erfindungsgemäß hergestellte Holzwerkstoff kann ausgewählt sein aus der Gruppe bestehend aus Faserplatten, Spanplatten, Dämmstoffen, Dämmplatten, Oriented Strandboards (OSB), Unoriented Strandboards, Furnieren, Sperrholz, Holzkompositwerkstoffen und Engineered Wood Products, insbesondere sind die Holzwerkstoffe mitteldichte Holzwerkstoffe mit einer Dichte von 550 kg/m³ bis 800 kg/m³, ultraleichte Holzwerkstoffe mit einer Dichte von unter 550 kg/m³ oder hochdichte Holzwerkstoffe mit einer Dichte von größer als 800 kg/m³. Bevorzugt wird die Erfindung zur Herstellung von OSB-, Span- und Faserplatten, verklebten Massivholzprodukten, verklebten Lagenhölzern (LVL, Sperrholz) und Dämmstoffen verwendet. Weitere Anwendungen ergeben sich im Bau und Klebstoffbereich.

Der Begriff "Engineered Wood Products" (man-madewood) betrifft verklebte Produkte, die Vollholz als lasttragende Werkstoffe ersetzen können, beispielsweise Span- oder Faserwerkstoffe, oder Vollholzprodukte wie Brettschichtholz (mit und ohne Keilzinkung).

Komponente (b) ist Teil des Bindemittelsystems und beschleunigt das Aushärten des Bindemittels. Komponente (b) wird beim erfindungsgemäßen Verfahren nicht *in situ* aus der Isocyanatgruppen-enthaltenden Komponente erzeugt, sondern als eigene Komponente eingesetzt.

In einer Ausführungsform des Verfahrens werden die Isocyanatgruppen-enthaltenden Komponente und die mindestens eine Komponente (b) des Bindemittelsystems mittels Düsen getrennt voneinander aufgesprüht.

Das getrennte Aufbringen der Komponenten kann ein zu schnelles Aushärten des Isocyanatbindemittels oder ein zu starkes Schäumen verhindern. Hierbei sind die Aushärtungsgeschwindigkeit und die Schaumbildungsneigung abhängig von den eingesetzten Komponenten. Die beiden Komponenten können beispielsweise auf Holzfasern oder -späne aufgebracht werden. Beispielsweise kann hierzu eine Ammoniumsalzlösung als die Komponente in Schritt (ii) verwendet werden.

In einer anderen Ausführungsform liegt das Bindemittelsystem als Gemisch aus allen Komponenten vor, z.B. wird die mindestens eine Komponente (b) in Schritt (ii) als Zusatz zum Isocyanatbindemittel-Wasser-Gemisch eingesetzt. Die Isocyanatgruppen-enthaltende Komponente (z.B. PMDI) und Ammoniumacetat und/oder Ammoniumphosphate können in Schritt (ii) miteinander gemischt und als Mischung auf Späne, Fasern oder Strands aufgebracht werden. Alternativ können beide Komponenten aber auch getrennt oder gemeinsam aufgesprüht werden.

Besonders bevorzugt wird das Aushärten bei einer Bindemittel-Temperatur in einem Bereich von 100-220°C bewirkt.

Hierbei ist die Bindemittel-Temperatur die Temperatur im Kern einer Platte beim Aushärten, z.B. beim Pressen. Die Plattentemperatur auf der Oberfläche bzw. Temperatur der Pressplatten (eingestellt in der Presse) ist die Oberflächentemperatur und ist immer größer als die Kern-Temperatur.

Alternativ oder zusätzlich zu der Verwendung einer erhöhten Temperatur in Schritt (iii), wie oben beschrieben, kann die Aushärtung unter Pressdruck durchgeführt werden.

Der hierbei angewendete Druck kann sehr unterschiedlich sein. Beispielsweise wird bei der Herstellung von Dämmstoffen wird ein sehr geringer Druck verwendet. Ein mittlerer Druck wird bei der Herstellung von MDF/Mitteldichte Faserplatten verwendet und ein hoher Druck wird bei der Herstellung von HDF/Hochdichte Faserplatten verwendet. Der verwendete Druck kann daher vom Fachmann in Abhängigkeit des herzustellenden Holzwerkstoffs geeignet ausgewählt werden.

Die Erfindung betrifft auch die Verwendung einer Komponente (b), wie hierin definiert, zur Beschleunigung der Aushärtung eines Bindemittelsystems in einem Holzwerkstoff, insbesondere zur Beschleunigung des Härtungsschrittes (iii) im erfindungsgemäßen Verfahren.

Da unerwartet festgestellt worden ist, dass die Beschleunigung von Sperrhölzern bereits bei geringeren Konzentrationen möglich ist, betrifft die Erfindung in einer Ausführungsform ein Verfahren zur Herstellung von Holzwerkstoffen, insbesondere Sperrhölzern, umfassend die Schritte, bevorzugt bestehend aus den Schritten:
(i) Bereitstellen von Lignocellulose-enthaltendem Material, enthaltend 5-40 Gew.-% Lignine und 15-95 Gew.-% Holocellulose;
(ii) In-Kontakt-Bringen des Materials aus Schritt (i) mit einem Bindemittelsystem, umfassend mindestens die folgenden Komponenten:
   - mindestens eine Isocyanatgruppen-enthaltende Komponente (a),
   - mindestens eine Komponente (b), ausgewählt aus der Gruppe bestehend aus Ammoniumacetat und Ammoniumphosphaten, und Mischungen davon, wobei das Bindemittelsystem Wasser enthält, und wobei die Komponente (b), bezogen auf ihre Ammoniumäquivalente, in einer bevorzugt 2,0 molaren Lösung in der verwendeten Menge an Wasser vorliegt und wobei sich die Komponente (b) bei 20°C in der verwendeten Menge an Wasser vollständig löst und auf einen pH-Wert von größer als 7 eingestellt wird; und
   - optional Lignine und/oder Tannine;

   wobei die Menge an Wasser 7-15 Gew.-%, bezogen auf die Gesamtmenge der Isocyanatgruppen-enthaltenden Komponente (a) beträgt;
   wobei das Bindemittelsystem die mindestens eine Isocyanatgruppen-enthaltende Komponente (a) in einer Menge von mindestens 50 Gew.-%, bezogen auf alle polymerisierbaren Komponenten des Bindemittelsystems, enthält;
   wobei bevorzugt nur das Lignocellulose-enthaltende Material und optional Lignine und/oder Tannine als Hydroxygruppe-enthaltende Komponente(n) in dem Verfahren verwendet werden,
   unter Erhalt einer Mischung; und
(iii) Thermisches, thermomechanisches oder mechanisches Aushärten der Mischung aus Schritt (ii), unter Erhalt eines Holzwerkstoffs.

Diese Ausführungsform ist mit allen anderen Ausführungsformen kombinierbar.

Hierbei ist die Menge an Komponente (b) mindestens 2 molar, bevorzugt aber höchstens 8 molar, bevorzugt höchstens 6 molar und besonders bevorzugt höchstens 4 molar am meisten bevorzugt 2,5 molar.

Die Erfindung betrifft auch die Verwendung einer Komponente (b), wie nachfolgend definiert, zur Beschleunigung der Aushärtung eines Bindemittelsystems in einem Holzwerkstoff, wobei das Bindemittelsystem die folgenden Komponenten enthält:
- mindestens eine Isocyanatgruppen-enthaltende Komponente (a),
- mindestens eine Komponente (b), ausgewählt aus der Gruppe bestehend aus Ammoniumacetat und Ammoniumphosphaten, und Mischungen davon, wobei das Bindemittelsystem Wasser enthält, und wobei die Komponente (b), bezogen auf ihre Ammoniumäquivalente, in einer ausreichend hohen Verfügbarkeit vorliegen müssen, was im Falle von Sperrholzplatten bei einer bevorzugt 2,0 oder 2,5 molaren und bei Spanplatten bei einer bevorzugten mindestens 6 molaren, Lösung in der verwendeten Menge an Wasser vorliegt und wobei sich die Komponente (b) bei 20°C in der verwendeten Menge an Wasser vollständig löst und auf einen pH-Wert von größer als 7 eingestellt wird; und
- optional Lignine und/oder Tannine.

Zudem betrifft die Erfindung einen Holzwerkstoff, hergestellt oder herstellbar durch ein Verfahren wie hierin beschrieben. Der Holzwerkstoff weist Biuretverbindungen im Bindemittel auf.

Der Nachweis von Reaktionsprodukten der Reaktion der OH-Gruppen des Lignins/Tannins und Isocyanat erfolgt bevorzugt mittels NMR-Spektroskopie.

Die vorliegende Erfindung betrifft auch die Verwendung von Ammoniumacetat und Ammoniumphosphaten in dem erfindungsgemäßen Verfahren, insbesondere zur Beschleunigung der Aushärtung einer Isocyanatkomponente in einem Lignocellulose-enthaltendem Material, in Abwesenheit von zusätzlichen, Hydroxygruppe(n)-enthaltende oder Aminogruppe(n)-enthaltende Komponenten.

Die vorliegende Erfindung betrifft auch Produkte, die mit dem erfindungsgemäßen Verfahren herstellbar sind oder damit hergestellt wurden.

Insbesondere betrifft die vorliegende Erfindung Holzwerkstoffe, die nach dem Aushärten ein Bindemittel mit der Struktureinheit -[NH-C(=O)-NR1-C(=O)-NH]-einhält, wobei R1 ein Wasserstoffatom sein kann oder eine entsprechende Struktur/Gruppen der Ausgangsmaterialien, oder im Molekül auch Ausgangs-Substitutionsgruppen enthalten sein können, wie z.B. Phenyl-gruppen bei PMDI, etc.

Somit enthält das Bindemittel bevorzugt die Struktureinheit -[NH-C(=O)-NR1-C(=O)-NRH]-, wobei R1 gleich Wasserstoff ist (falls eine Ammoniak-freisetzende Komponente verwendet wird), oder die Gruppe darstellt, die durch das eingesetzte primäre Amin gebildet wird.

Bevorzugt ist die Struktureinheit -[NH-C(=O)-NH-C(=O)-NH]-.

Insbesondere bevorzugt enthalten diese Holzwerkstoffe kein UF (Harnstoff-Formaldehydharz-Leim), MUF (Melamin-Urea-Formaldehyd-Leim), MUPF (Melamin-Urea-Phenol-Formaldehyd-Leim) oder MF (Melamin-Formaldehyd-Kondensationsharze), bzw. deren ungehärteten Ausgangsmaterialien.

Falls die Komponente (b) unter den Härtungsbedingungen keinen Ammoniak freisetzt, z.B. falls primäre Amine mit geringem Dissoziationsdruck verwendet werden, dann entsteht nach Reaktion mit Isocyanat kein Harnstoff mit NH₂-Gruppe, sondern mit einer NHR-Gruppe. Bei primären Aminen mit zwei oder mehr Aminogruppen reagiert erst eine und dann die andere Aminogruppe mit Isocyanat, aber nicht zweimal die gleiche Aminogruppe wie es erfindungsgemäß erforderlich ist.

Thermisches Aushärten: Dieser Ausdruck betrifft das Aushärten bzw. das Polymerisieren bzw. die Polyaddition der Isocyanatgruppen-enthaltenden Komponente mit der Komponente aus Schritt (ii) des Verfahrens bei erhöhter Klebstofftemperatur, ohne Zugabe von weiteren Katalysatoren. Bevorzugt ist diese Temperatur größer als 100°C und geringer als 220°C.

Der Begriff "Werkstoff", so wie hier verwendet, betrifft Materialien, die nach gegebenenfalls weiterer Verarbeitung, der beabsichtigten Verwendung zugeführt werden. Beispielsweise können Dämmplatten zugeschnitten werden und dann in das zu dämmende Objekt eingebaut werden.

Der Ausdruck "aus der Natur gewonnen" bedeutet, dass das Lignocellulose-enthaltende Material aus Pflanzen erhalten wird, wobei die Pflanzen kultiviert werden können, oder aus natürlichen Beständen, z.B. Wäldern, stammen können.

Der Ausdruck "unsubstituierte Ammoniumsalze" ist gleichbedeutend mit "NH₄⁺-Salze".

Der Ausdruck "primäre Ammoniumsalze" betrifft "R-NH₃⁺-Salze". Verbindungen mit einer Aminogruppe können als R-NH₂ beschrieben werden.

Der Ausdruck "Alkyl", wie er hierin verwendet wird, bezieht sich auf geradkettige oder verzweigte, gesättigte oder ungesättigte Kohlenwasserstoff-Substituenten, Beispiele der Alkylgruppen schließen ein Methyl, Ethyl, Propyl, Butyl, Pentyl, Hexyl, Octyl, Decyl, Isopropyl, sec-Butyl, Isobutyl, tert-Butyl, Isopentyl, Vinyl, Allyl, 1-Butenyl, 2-Butenyl, Isobutenyl, und Pentenyl.

Der Ausdruck "Cycloalkyl" oder "Kohlenstoffzyklen", wie er hierin verwendet wird, bezieht sich auf gesättigte oder ungesättigte, nicht aromatische Kohlenwasserstoffzyklen, die aus eins, zwei oder mehr Ringen bestehen können. Beispiele hiervon schließen ein: Cyclopropyl, Cyclobutyl, Cyclopentyl, Cyclopentenyl, Cyclopentadienyl, Cyclohexyl, Cyclohexonyl, usw.

Der Ausdruck "Heteroalkyl", wie er hierin verwendet wird, bezieht sich auf geradkettige oder verzweigte, gesättigte oder ungesättigte Kohlenwasserstoff - Substituenten, in denen mindestens ein Kohlenstoff durch ein Heteroatom ersetzt ist. Die Heteroatome sind bevorzugt ausgewählt aus S, N, O, und P.

Der Ausdruck "Aryl", wie er hierin verwendet wird, bezieht sich auf aromatische Substituenten, die aus ein oder mehreren miteinander fusionierten Ringen bestehen können. Beispiele für Aryl schließen ein: Phenyl, Naphtyl und Antracenyl.

Der Ausdruck "Acyl", wie er hierin verwendet wird, bezieht sich auf die funktionelle Gruppe mit der allgemeinen Struktur Ra-(C=O) - wobei Ra einen gegebenenfalls substituierten Kohlenwasserstoffrest darstellt, insbesondere eine Kohlenstoffkette mit C1 bis C8 Kohlenstoffatomen.

Der Ausdruck "Heteroaryl", wie er hierin verwendet wird, bezieht sich auf aromatische Substituenten, die aus ein oder mehreren miteinander fusionierten Ringen bestehen können. Hierbei ist mindestens ein Kohlenstoffatom der aromatischen R-Gruppe durch ein Heteroatom ersetzt, insbesondere S, N, O oder P. Beispiele für Heteroarylgruppen schließen ein: Pyridinyl, Furanyl, Pyrrolyl, Triazolyl, Pyrazolyl, Imidazolyl, Thiophenyl, Indolyl, Benzofuranyl, Benzimidazolyl, Indazolyl, Benzotriazolyl, Benzisoxazolyl, und Chinolinyl.

Der Ausdruck "Heterocycloalkyl" oder "Heterozyklen", wie er hierin verwendet wird, bezieht sich auf gesättigte oder ungesättigte, nicht aromatische zyklische Kohlenwasserstoff-Substituenten, die aus ein oder mehreren miteinander fusionierten Ringen bestehen können, dabei ist mindestens ein Kohlenstoff in einem der Ringe durch ein Heteroatom ersetzt, insbesondere S, N, O oder P. Beispiele für Heterocycloalkyle schließen ein: Tetrahydrofuranyl, Pyrrolidinyl, Piperidinyl, 1 ,4-Dioxanyl, Morpholinyl, Piperazinyl, Oxyzolidinyl, Decahydrochinolinyl.

Wenn Ausdrücke wie "gegebenenfalls substituiert" verwendet werden, beziehen sich diese Ausdrücke auf alle sich anschließenden Reste solange nicht anders ausgeführt. D.h., der Ausdruck "gegebenenfalls substituierte Alkyl, Heteroalkyl, Aryl, Acyl" ist als "gegebenenfalls substituierte Alkyl, gegebenenfalls substituierte Heteroalkyl, gegebenenfalls substituierte Aryl, gegebenenfalls substituierte Acyl" zu lesen.

Die Herstellung der Holzwerkstoffe kann unter Verwendung von üblichen Vorrichtungen, z.B. Heizpressen, wie im Stand der Technik bekannt, erfolgen. Beispielhafte Verfahren sind in den hierein zitierten Dokumenten zu finden, beispielsweise in der DE2711958. Siehe auch Dunky, M., Niemz, P. (2002) Holzwerkstoffe und Leime - Technologie und Einflussfaktoren. Springer-Verlag, Berlin, Heidelberg, Seiten 122 - 128; und Deppe, H., Ernst, K. (2000) Taschenbuch der Spanplattentechnik. DRW-Verlag, Leinfelden-Echterdingen.

Die Ausdrücke "thermisches Aushärten", "thermomechanisches Aushärten" oder "mechanisches Aushärten" der Mischung betrifft das Anwenden von Verfahrensbedingungen, die es erlauben, das erfindungsgemäß verwendete Bindemittelsystem zu polymerisieren. Geeignete Bedingungen sind dem Fachmann bekannt und können je nach Bindemittelsystem durch Routineversuche optimiert werden.

In einer bevorzugten Ausführungsform der Erfindung werden Spanplatten gepresst.

Das System zum Pressen von Spanplatten besteht aus folgenden Elementen:

| | |
|---|---|
| a) Lignocellulosematerial absolut trocken als Matte (atro Matte) | 1000 g |
| | |
| b) Bindemittelsystem, bestehend aus folgenden Stoffen in Gewichtsprozent bezogen auf die atro Matte): | |
| | |
| 6 wt % Isocyanat - Klebstoff (Komponente 1) | 60g |
| | |
| 0,6 wt % Wasser - (Komponente 2) | 6g |
| 4,5 Molar DAP (9 Molar Ammonium und Ammoniak) in den 10% Wasser (mw 132,06) (Komponente 3a) | 0,36% |
| oder | |
| 9 Molar AA in den 10% Wasser (mw=77,08 (Komponente 3b) | |
| 0,42% | |

### Messung des pH-Werts des Bindemittelsystems

Die Bestimmung erfolgte mittels eines pH-Messgerates Level 2 der Firma inoLab (Kladno,Tschechien). Das Gerät wurde über Maßlösungen dreistufig kalibriert (pH 4, 6, 8). Die eigentliche Messung erfolgte durch das Einführen der Messsonde in die 4,5 molaren (bezogen auf die Konzentration von Ammonium und Ammoniak) Salzlösungen. Die Konzentration wurde gewählt, da sie in der Mitte aller Löslichkeiten liegt. Der pH-Wert in der Lösung des Beschleunigers wird in Wasser ohne Isocyanat bestimmt.

### Festlegen der Mengen an Isocyanat, Wasser und Beschleuniger

Die Menge an Isocyanat wird im Hinblick auf die gewünschte Anwendung, das heißt die Art des verwendeten Lignocellulose-enthaltenden Materials und das gewünschte Produkt (Spanplatte oder Lagenhölzer etc.), festgelegt. Die Menge an Wasser wird dann beispielsweise auf 10% des Isocyanats festgelegt. Eine 9 molare Lösung des Beschleunigers, z.B. Ammoniumacetat (AA) (77 g/mol), in diesen 10% Wasser kann man dann herstellen, indem man 9 Mol (9x77g=693 g) in einem 1L Kolben vorlegt. Der Kolben wird auf 1L mit Wasser aufgefüllt und die dafür notwendige Menge an Wasser bestimmt. Wenn nun die festgelegte Menge an Wasser verwendet wird (10% der Menge an Isocyanat), dann kennt man auch die Menge an AA, die mit der Menge an Wasser eingebracht wird, da die Konzentration an AA und Wasser in einem Liter bekannt sind.

Bei Verwendung von Diammoniumhydrogenphosphat (DAP) müssen zwei Ammoniumäquivalente pro Mol DAP berücksichtigt werden. Für eine 9 Molare Lösung werde daher 4,5 Mol DAP in einem 1L Kolben vorgelegt (4,5x 132 g/mol=594 g).

### Beispiele

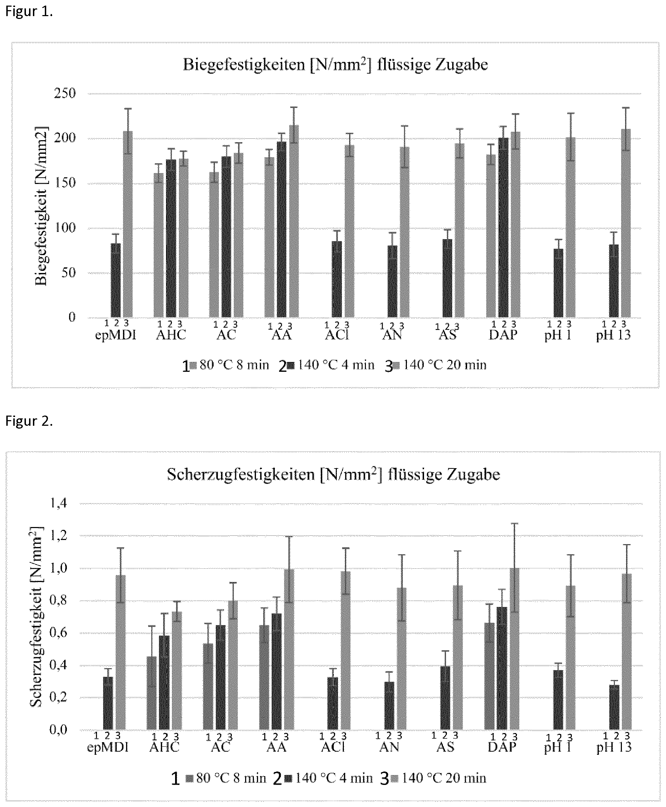

Im Rahmen der vorliegenden Erfindung wurde das Aushärtungsverhalten Isocyanatgruppen-enthaltender Komponenten am Beispiel des PMDIs vor allem im Differential-Scan-Kalorimeter (DSC) untersucht. Es ist bekannt, dass die direkte Zugabe von Ammoniak zum Reaktionsgemisch eine deutliche Abnahme der Temperatur zur Folge hatte, bei der die exotherme Reaktion einsetzte (Onset-Temperatur, Figur 1). Allerdings lauft die Reaktion dann so heftig ab, dass nicht die gesamte Wärmeenergie gemessen werden kann. Demgegenüber ergibt die Zugabe von Ammoniumsulfat, nur eine geringe Abnahme der Onset-Temperatur (Figur 1). Daher muss der geeignete pH-Bereich durch Einsatz von Puffern bzw. Säuren (zur Bildung von Ammoniumsalzen) und eine geeignete Konzentration des Beschleunigers im Bindemittelsystem gewählt werden, um eine gewünschte Beschleunigung und Festigkeit zu erzielen.

Die Ausprägung der Festigkeiten über verschiedene Temperaturen und Konzentrationen der Beschleunigungsmittel wurde mit Hilfe des ABES (Automated Bonding Evaluation System) ermittelt. Hierbei werden Furniere miteinander verklebt und die Zugscherfestigkeit bestimmt. Als Referenz (Ref) wurde zuerst eine Messreihe mit reinem PMDI und 10 % Wasserzugabe (W/W) und unterschiedlichen Temperaturen und Presszeiten erstellt.

### Anwendungsbeispiel 1 Sperrhölzer:

### Beispiel 1 - Biegefestigkeit

Sperrhölzer, die mit Hilfen von Ammoniumacetat (AA) und Diammoniumphosphat (DAP) hergestellt wurden, zeigen eine erhöhte Biegefestigkeit. Ammoniumhydrogencarbonat (AHC) und Ammoniumcarbonat (AC) erreichen eine maximale Biegefestigkeit von gemittelt 183 N/mm² (siehe Figur 1).

### Beispiel 2 - Scherzugfestigkeit

Ammoniumhydrogencarbonat (AHC), Ammoniumcarbonat (AC), sowie Ammoniumacetat (AA) und Diammoniumphosphat (DAP) zeigen eine erhöhte Scherzugfestigkeit auch bei kürzeren Pressdauern oder niedrigeren Temperaturen. Jedoch ist die Scherzugfestigkeit von Sperrhölzern bei Zugabe von AHC und AC schlechter als diejenige bei Zugabe von AA und DAP, besonders im Bezug auf die maximal erreichte Scherzugfestigkeit (siehe Figur 2).

### Beispiel 3 - kristalline Beschleuniger

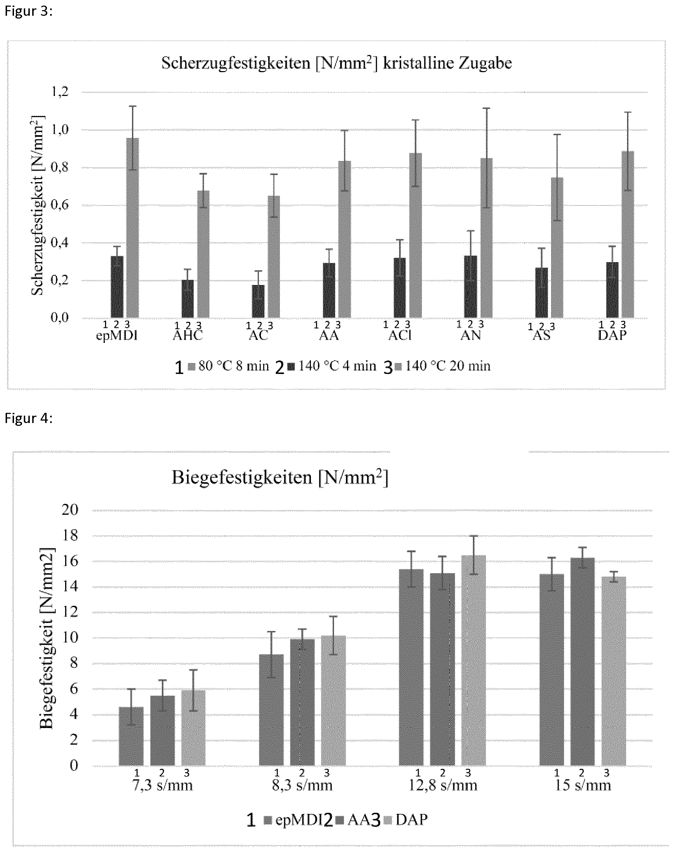

Die Vorschädigung der Holzoberflache durch das Verpressen kristalliner Salze sowie der Gasdruck scheinen die Scherzugfestigkeit in besonderem Maße zu beeinträchtigen (siehe Figur 3).

### Anwendungsbeispiel 2: Spanplatten

### Beispiel 4 - Biegefestigkeit und dynamisches E-Modul

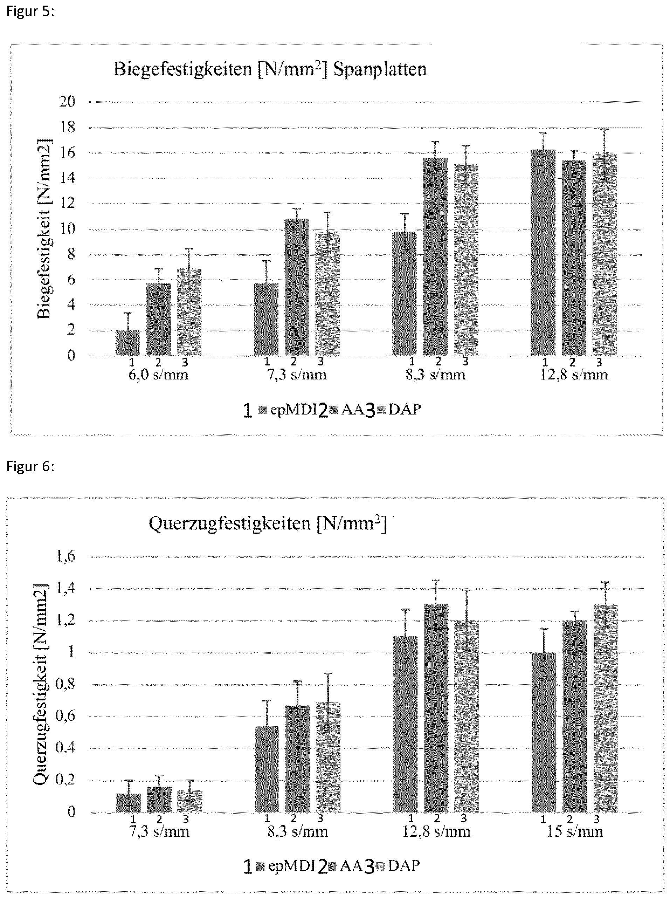

Die Biegefestigkeiten von Spanplatten steigen mit länger werdender Presszeit auf ein Maximum bei 12,8 s/mm (gemittelt 15,2 N/mm2) (Figur 4); die nächst höhere Presszeitstufe hat keinen Einfluss auf die Entwicklung der Festigkeiten. Zwischen den Varianten innerhalb der einzelnen Presszeiten gibt es keine signifikanten Unterschiede. Bei den niedrigen Stufen 7,3 s/mm und 8,3 s/mm sind die Salze AA und DAP vorteilhaft. Der Vorteil ist bei dem Einsatz einer 5 molaren Lösung tendenziell erkennbar. Ab einer 9 molaren Lösung tritt dieser Vorteil klar hervor. Die maximale Festigkeit wird hier bereits bei einer Presszeit von 8,3 s/mm erreicht (Figur 5).

### Beispiel 5 - Querzugfestigkeiten in Abhängigkeit der Presszeit

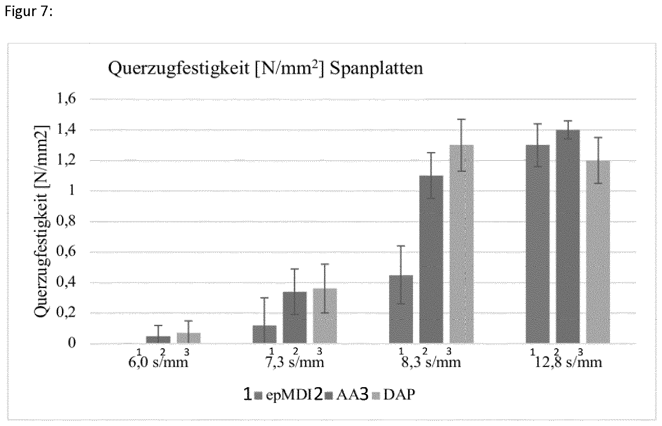

Bei der Querzugfestigkeit von Spanplatten verhält es sich analog zur Biegefestigkeit, jedoch tritt der Effekt hier noch deutlicher zutage. Bei Einsatz einer 5 molaren Lösung kommt es zu einer leichten, jedoch nicht signifikanten Verbesserung der Festigkeit in den Spanplatten (Figur 6). Der Einsatz einer 9 molaren Lösung hingegen führt zu einer starken Beschleunigung der Reaktion, da bereits nach 8,3s die maximale Festigkeit erreicht wird (Figur 7).

### Beispiel 6 - Einfluss des pH-Werts

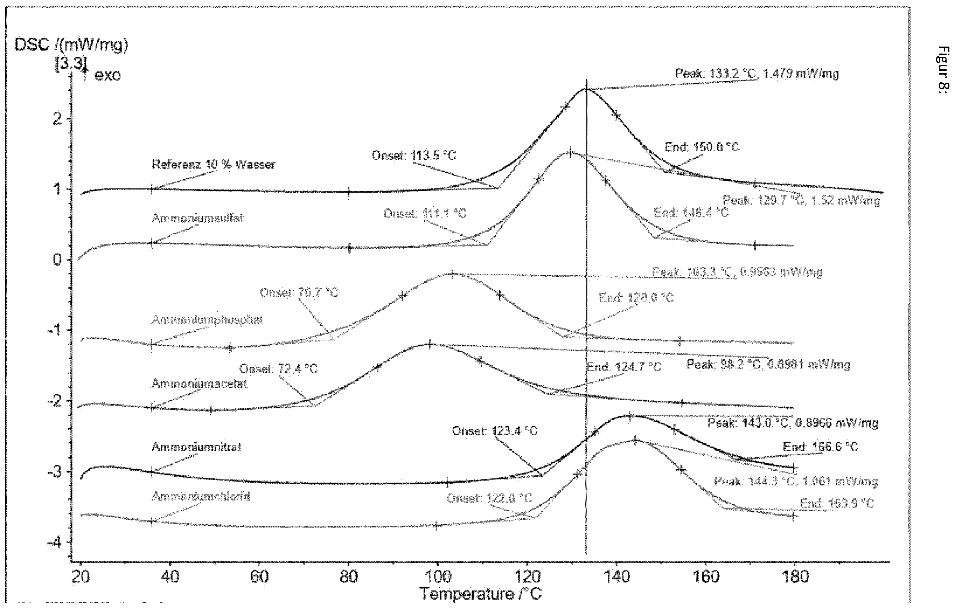

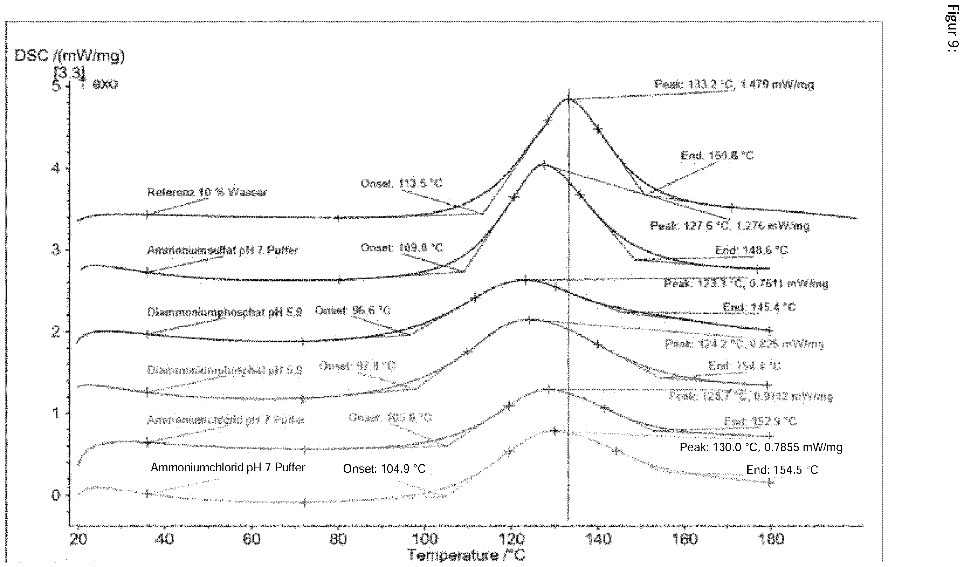

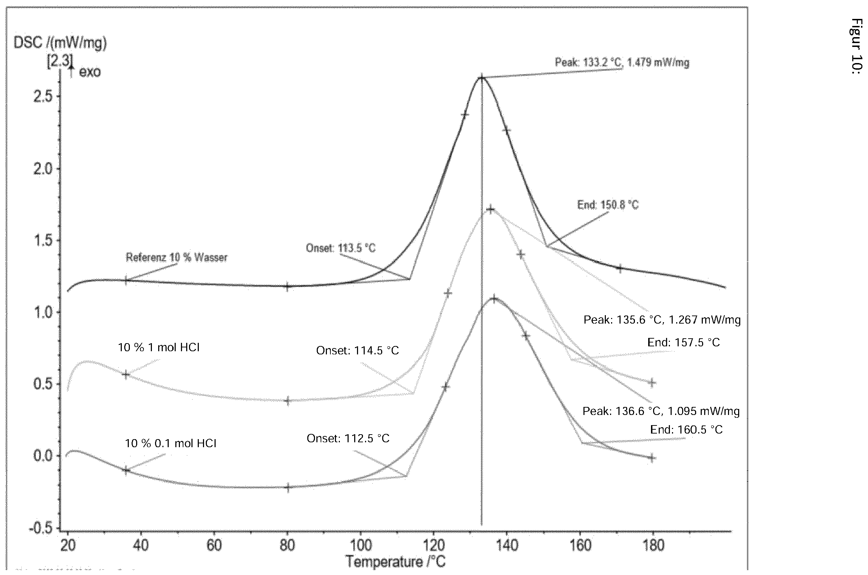

Die pH-Werte wurden hierbei so angepasst, dass DAP aus dem neutral/ basischen in den sauren Bereich auf pH 5,9 verschoben wurde. Dies resultiert in einem um ca. 20 °C späteren Onset und einer starken Verbreiterung der Flache unter der Kurve. AS und ACl wurden von dem ursprünglich niedrigen pH-Wert auf neutral pH 7 angehoben. Insbesondere bei den einprotonigen ACI-Losungen tritt eine Beschleunigung der Reaktion, bzw. Verschiebung des Onsets um ebenfalls fast 20 °C ein. Die Ergebnisse für AA und AN verhalten sich gleich der dargestellten Werte für DAP, bzw. ACl. Der lineare Zusammenhang zwischen pH-Wert und Onset Temperatur fallt mit R2 = 0,89 stark aus. Wie in Figur 10 gezeigt, hat ein saurer pH keine signifikanten Auswirkungen auf das Polymerisationsverhalten. Das Milieu wurde mit 0,1 mol, bzw. 1 mol HCl auf pH 1 eingestellt und enthielt keinen Ammoniak und kein Ammonium. Fasst man die sauren Salze ACl, AN und die Messungen mit saurem pH zusammen, so kann man einen Trend zur Verzögerung der Reaktion erkennen. Dieser ist bei den Ammoniumsalzen stärker ausgeprägt, als bei der reinen pH-Wert Einstellung (siehe auch Figuren 8 und 9).

### Zitierte Literatur:

DE 10 2015 210 569 A1;
DE10356767 A1;
DE4229396;
DE19522951 A1;
DE2711958 A1;
DE102007038085 A1
DE19959170 A1;
DE19812751 A1;
DE102007038085 A1;
Dunky, M., Niemz, P. (2002) Holzwerkstoffe und Leime - Technologie und Einflussfaktoren. Springer-Verlag, Berlin, Heidelberg, Seiten 122 - 128 und 386-391;
Deppe, H., Ernst, K. (2000) Taschenbuch der Spanplattentechnik. DRW-Verlag, Leinfelden-EchterdingenEP 2062708A2;
EP2062708 A;
EP2193899A1;
EP2644340A1;
WO2019038116 A1;
WO2016156226 A1;
Wise LE, Murphy, M, D'Addies AA (1946) "Chlorite holocellulose, its fractionation and bearing on summative wood analysis and on studies on the hemicellulose" (Paper Trade Journal 122/29: 11-19).

## Patentansprüche

1. Verfahren zur Herstellung von Holzwerkstoffen, umfassend die Schritte:
(i) Bereitstellen von Lignocellulose-enthaltendem Material, enthaltend 5-40 Gew.-% Lignine und 15-95 Gew.-% Holocellulose;
(ii) In-Kontakt-Bringen des Materials aus Schritt (i) mit einem Bindemittelsystem, umfassend mindestens die folgenden Komponenten:
- mindestens eine Isocyanatgruppen-enthaltende Komponente (a),
- mindestens eine Komponente (b), ausgewählt aus der Gruppe bestehend aus Ammoniumacetat, (NH₄)H₂PO₄ (Ammoniumdihydrogenphosphat), (NH₄)₂HPO₄ (Diammoniumhydrogenphosphat), (NH₄)₃PO₄ (Ammoniumphosphat), [NH₄PO₃]ₙ (Ammoniumpolyphosphat) und Mischungen davon, wobei das Bindemittelsystem Wasser enthält, und wobei die Komponente (b), bezogen auf ihre Ammoniumäquivalente, in einer mindestens 2.0 molaren, bevorzugt mindestens 6.0 molaren, Lösung in der verwendeten Menge an Wasser vorliegt und wobei sich die Komponente (b) bei 20°C in der verwendeten Menge an Wasser vollständig löst und auf einen pH-Wert von größer als 7 eingestellt wird; und
wobei die Menge an Wasser 7-15 Gew.-%, bezogen auf die Gesamtmenge der Isocyanatgruppen-enthaltenden Komponente (a) beträgt;
wobei das Bindemittelsystem die mindestens eine Isocyanatgruppen-enthaltende Komponente (a) in einer Menge von mindestens 50 Gew.-%, bezogen auf alle polymerisierbaren Komponenten des Bindemittelsystems, enthält;
unter Erhalt einer Mischung; und
(iii) Thermisches, thermomechanisches oder mechanisches Aushärten der Mischung aus Schritt (ii), unter Erhalt eines Holzwerkstoffs.

2. Das Verfahren gemäß Anspruch 1 wobei
i) der Holzwerkstoff eine Spanplatte oder Faserplatte ist und die Komponente (b) in einer mindestens 6.0 molaren Lösung eingesetzt wird, oder
ii) der Holzwerkstoff ein Sperrholz ist und die Komponente (b) in einer mindestens 2.0 molaren Lösung eingesetzt wird.

3. Das Verfahren gemäß Anspruch 1 oder 2, und/oder wobei die mindestens eine Komponente (b) ausgewählt ist aus Ammoniumacetat und Diammoniumhydrogenphosphat.

4. Das Verfahren gemäß einem der vorangegangenen Ansprüche, wobei der pH-Wert einer Lösung der verwendeten Menge an Komponente (b) in der verwendeten Menge an Wasser auf einen Bereich von 7-10 eingestellt wird, bevorzugt mit Natronlauge und/oder einer Mineralsäure, bevorzugt ohne Chlorid, insbesondere Schwefelsäure.

5. Das Verfahren gemäß einem der vorangegangenen Ansprüche, wobei das Bindemittelsystem keine Komponente aus der folgenden Gruppe enthält: Ammoniak, Amine und zusätzliche Ammoniumverbindungen.

6. Das Verfahren gemäß einem der vorangegangenen Ansprüche, wobei die Komponente (b) in dem Bindemittelsystem in einer Menge von 1-20 Gew.-%, bevorzugt 3-8 Gew.-%, weiter bevorzugt 4-7 Gew.-% vorliegt.

7. Das Verfahren gemäß einem der vorangegangenen Ansprüche, wobei das Bindemittelsystem die mindestens eine Isocyanatgruppen-enthaltenden Komponente(n) (a) in einer Gesamtmenge von mindestens 80 Gew.-%, bevorzugt mindestens 90 Gew.-% oder 100 Gew.-%, bezogen auf alle polymerisierbaren Komponenten des Bindemittelsystems, enthält.

8. Das Verfahren gemäß einem der vorangegangenen Ansprüche, wobei die Molarität der Ammoniumäquivalente der Komponente (b) mindestens 6 Mol, bzw. mindestens 7 Mol oder mindestens 8 Mol bezogen auf eine Lösung der Komponente (b) in der verwendeten Menge Wasser beträgt.

9. Das Verfahren gemäß einem der vorangegangenen Ansprüche, wobei die Menge der mindestens einen Isocyanatgruppen-enthaltenden Komponente (a) bezogen auf das Lignocellulose-enthaltende Material 1-10 Gew.-%, bevorzugt 2-8 Gew.-%, weiter bevorzugt 3-8 Gew.-% beträgt.

10. Das Verfahren gemäß Anspruch 1, wobei das thermische, thermomechanische oder mechanische Aushärten der Mischung in Schritt (iii) in einer Heißpresse bei einer Temperatur von 80-220°C durchgeführt wird

11. Das Verfahren gemäß Anspruch 1, wobei das thermische, thermomechanische oder mechanische Aushärten der Mischung in Schritt (iii) bei Presszeiten in einer Heißpresse bei einer Temperatur von 100-180°C von weniger als 12 s/mm, bevorzugt weniger als 8 s/mm durchgeführt wird.

12. Das Verfahren gemäß einem der vorangegangenen Ansprüche, wobei die Isocyanatgruppen-enthaltende Komponente eine Di- oder Polyisocyanat-Komponente ist, bevorzugt Diphenylmethandiisocyanat; und/oder
der Holzwerkstoff ausgewählt ist aus der Gruppe bestehend aus Faserplatten, Spanplatten, Dämmstoffen, Dämmplatten, Oriented Strandboards, Unoriented Strandboards, Furnieren, Sperrholz, Holzkompositwerkstoffen und Engineered Wood Products, insbesondere sind die Holzwerkstoffe mitteldichte Holzwerkstoffe mit einer Dichte von 550 kg/m³ bis 800 kg/m³, ultraleichte Holzwerkstoffe mit einer Dichte von unter 550 kg/m³ und hochdichte Holzwerkstoffe mit einer Dichte von größer als 800 kg/m³.

13. Das Verfahren gemäß einem der vorangegangenen Ansprüche, wobei die Isocyanatgruppen-enthaltenden Komponente und die mindestens eine Komponente (b) des Bindemittelsystems mittels Düsen getrennt voneinander aufgesprüht werden, und/oder wobei
in Schritt (i) ein oder mehrere Zusatzstoffe in das Lignocellulose-enthaltende Material eingemischt wird, bevor es in Kontakt mit dem Bindemittelsystem gebracht wird.

14. Verfahren zur Herstellung von Sperrhölzern, umfassend die Schritte:
(i) Bereitstellen von Lignocellulose-enthaltendem Material, enthaltend 5-40 Gew.-% Lignine und 15-95 Gew.-% Holocellulose;
(ii) In-Kontakt-Bringen des Materials aus Schritt (i) mit einem Bindemittelsystem, umfassend mindestens die folgenden Komponenten:
- mindestens eine Isocyanatgruppen-enthaltende Komponente (a),
- mindestens eine Komponente (b), ausgewählt aus der Gruppe bestehend aus Ammoniumacetat, (NH₄)H₂PO₄ (Ammoniumdihydrogenphosphat), (NH₄)₂HPO₄ (Diammoniumhydrogenphosphat), (NH₄)₃PO₄ (Ammoniumphosphat), [NH₄PO₃]ₙ (Ammoniumpolyphosphat), und Mischungen davon, wobei das Bindemittelsystem Wasser enthält, und wobei die Komponente (b), bezogen auf ihre Ammoniumäquivalente, in einer mindestens 2,0 molaren Lösung in der verwendeten Menge an Wasser vorliegt und wobei sich die Komponente (b) bei 20°C in der verwendeten Menge an Wasser vollständig löst und auf einen pH-Wert von größer als 7 eingestellt wird; und
wobei die Menge an Wasser 7-15 Gew.-%, bezogen auf die Gesamtmenge der Isocyanatgruppen-enthaltenden Komponente (a) beträgt;
wobei das Bindemittelsystem die mindestens eine Isocyanatgruppen-enthaltende Komponente (a) in einer Menge von mindestens 50 Gew.-%, bezogen auf alle polymerisierbaren Komponenten des Bindemittelsystems, enthält;
unter Erhalt einer Mischung; und
(iii) Thermisches, thermomechanisches oder mechanisches Aushärten der Mischung aus Schritt (ii), unter Erhalt eines Holzwerkstoffs.

15. Holzwerkstoff, hergestellt oder herstellbar durch ein Verfahren gemäß einem der Ansprüche 1-14.

## Claims

1. A method for the production of wood-based materials, comprising the steps:
(i) providing lignocellulose-containing material containing 5-40% by weight lignins and 15-95% by weight holocellulose;
(ii) contacting the material from step (i) with a binder system comprising at least the following components:
- at least one isocyanate groups-containing component (a),
- at least one component (b) selected from the group consisting of ammonium acetate, (NH₄)H₂PO₄ (ammonium dihydrogen phosphate), (NH₄)₂HPO₄ (diammonium hydrogen phosphate), (NH₄)₃PO₄ (ammonium phosphate), [NH₄PO₃]n (ammonium polyphosphate) and mixtures thereof, wherein the binder system contains water, and wherein component (b), based on its ammonium equivalents, is present in an at least 2.0 molar, preferably at least 6.0 molar, solution in the amount of water used, and wherein component (b) dissolves completely at 20°C in the amount of water used and is adjusted to a pH greater than 7; and
wherein the amount of water is 7-15% by weight based on the total amount of the isocyanate groups-containing component (a);
wherein the binder system contains the at least one isocyanate groups-containing component (a) in an amount of at least 50% by weight, based on all polymerisable components of the binder system;
wherein a mixture is obtained; and
(iii) thermal, thermomechanical or mechanical curing of the mixture of step (ii), wherein a wood-based material is obtained.

2. The method of claim 1, wherein
i) the wood-based material is a particleboard or fibreboard, and component (b) is used in an at least 6.0 molar solution, or
ii) the wood-based material is a plywood, and component (b) is used in an at least 2.0 molar solution.

3. The method of claim 1 or 2, and/or wherein the at least one component (b) is selected from ammonium acetate and diammonium hydrogen phosphate.

4. The method of any of the preceding claims, wherein the pH of a solution of the amount of component (b) used in the amount of water used is adjusted to a range of 7-10, preferably with caustic soda and/or a mineral acid, preferably without chloride, in particular sulphuric acid.

5. The method of any of the preceding claims, wherein the binder system does not contain any component from the following group: ammonia, amines and additional ammonium compounds.

6. The method of any of the preceding claims, wherein component (b) is present in the binder system in an amount of 1-20% by weight, preferably 3-8% by weight, more preferably 4-7% by weight.

7. The method of any of the preceding claims, wherein the binder system contains the at least one isocyanate groups-containing component(s) (a) in a total amount of at least 80% by weight, preferably at least 90% by weight or 100% by weight, based on all polymerisable components of the binder system.

8. The method of any of the preceding claims, wherein the molarity of the ammonium equivalents of component (b) is at least 6 moles, or at least 7 moles, or at least 8 moles, respectively, based on a solution of component (b) in the amount of water used.

9. The method of any of the preceding claims, wherein the amount of the at least one isocyanate groups-containing component (a) based on the lignocellulose-containing material is 1-10% by weight, preferably 2-8% by weight, more preferably 3-8% by weight.

10. The method of claim 1, wherein the thermal, thermomechanical or mechanical curing of the mixture in step (iii) is carried out in a hot press at a temperature of 80-220°C.

11. The method of claim 1, wherein the thermal, thermomechanical or mechanical curing of the mixture in step (ii) is carried out at pressing times in a hot press at a temperature of 100-180°C of less than 12 s/mm, preferably less than 8 s/mm.

12. The method of any of the preceding claims, wherein the isocyanate groups-containing component is a di- or polyisocyanate component, preferably diphenylmethane isocyanate; and/or
the wood-based material is selected from the group consisting of fibreboards, particleboards, insulation materials, insulation boards, oriented strand boards, unoriented strand boards, veneers, plywood, wood composites and engineered wood products, in particular the wood-based materials are medium-density wood-based materials having a density of from 550 kg/m³ to 800 kg/m³, ultra-light-density wood-based materials having a density of less than 550 kg/m³, and high-density wood-based materials having a density of greater than 800 kg/m³.

13. The method of any of the preceding claims, wherein the isocyanate groups-containing component and the at least one component (b) of the binder system are sprayed on separately from each other by means of nozzles, and/or wherein
in step (i), one or more additives are mixed into the lignocellulose-containing material before it is brought into contact with the binder system.

14. A method for the production of plywoods, comprising the steps of:
(i) providing lignocellulose-containing material containing 5-40% by weight lignins and 15-95% by weight holocellulose;
(ii) contacting the material from step (i) with a binder system comprising at least the following components:
- at least one isocyanate groups-containing component (a),
- at least one component (b) selected from the group consisting of ammonium acetate, (NH₄)H₂PO₄ (ammonium dihydrogen phosphate), (NH₄)₂HPO₄ (diammonium hydrogen phosphate), (NH₄)₃PO₄ (ammonium phosphate), [NH₄PO₃]ₙ (ammonium polyphosphate), and mixtures thereof, wherein the binder system contains water, and wherein component (b), based on its ammonium equivalents, is present in an at least 2.0 molar solution in the amount of water used, and wherein component (b) dissolves completely at 20°C in the amount of water used and is adjusted to a pH greater than 7; and
wherein the amount of water is 7-15% by weight based on the total amount of the isocyanate groups-containing component (a);
wherein the binder system contains the at least one isocyanate groups-containing component (a) in an amount of at least 50% by weight based on all polymerisable components of the binder system;
wherein a mixture is obtained; and
(iii) thermal, thermomechanical or mechanical curing of the mixture of step (ii), wherein a wood-based material is obtained.

15. A wood-based material, produced or producible by a method according to any one of claims 1-14.

## Revendications

1. Procédé de fabrication de matériaux à base de bois, comprenant les étapes de :
(i) fourniture d'un matériau contenant de la lignocellulose, contenant 5 à 40 % en poids de lignines et 15 à 95 % en poids d'holocellulose ;
(ii) mise en contact du matériau de l'étape (i) avec un système de liant comprenant au moins les composants suivants :
- au moins un composant (a) contenant des groupes isocyanate,
- au moins un composant (b) choisi dans le groupe constitué par l'acétate d'ammonium, (NH₄)H₂PO₄ (dihydrogénophosphate d'ammonium), (NH₄)₂HPO₄ (hydrogénophosphate de diammonium), (NH₄)₃PO₄ (phosphate d'ammonium), [NH₄PO₃]ₙ (polyphosphate d'ammonium) et leurs mélanges, dans lequel le système de liant contient de l'eau, et dans lequel le composant (b) est présent, par rapport à ses équivalents ammonium, dans une solution au moins 2,0 molaire, de préférence au moins 6,0 molaire, dans la quantité d'eau utilisée, et dans lequel le composant (b) se dissout complètement à 20 °C dans la quantité d'eau utilisée et est réglé à un pH supérieur à 7 ; et
dans lequel la quantité d'eau est de 7 à 15 % en poids par rapport à la quantité totale du composant (a) contenant des groupes isocyanate ;
dans lequel le système de liant contient ledit au moins un composant (a) contenant des groupes isocyanate en une quantité d'au moins 50 % en poids par rapport à tous les composants polymérisables du système de liant ;
pour obtenir un mélange ; et
(iii) durcissement thermique, thermomécanique ou mécanique du mélange de l'étape (ii), pour obtenir un matériau à base de bois.

2. Procédé selon la revendication 1, dans lequel
i) le matériau à base de bois est un panneau de particules ou un panneau de fibres et le composant (b) est utilisé dans une solution au moins 6,0 molaire, ou
ii) le matériau à base de bois est un contreplaqué et le composant (b) est utilisé dans une solution au moins 2,0 molaire.

3. Procédé selon la revendication 1 ou 2, dans lequel ledit au moins un composant (b) est choisi parmi l'acétate d'ammonium et l'hydrogénophosphate de diammonium.

4. Procédé selon l'une des revendications précédentes, dans lequel le pH d'une solution de la quantité utilisée de composant (b) dans la quantité utilisée d'eau est réglé dans une plage de 7 à 10, de préférence avec de la soude caustique et/ou un acide minéral, de préférence sans chlorure, en particulier de l'acide sulfurique.

5. Procédé selon l'une des revendications précédentes, dans lequel le système de liant ne contient pas de composant du groupe suivant : ammoniac, amines et composés d'ammonium supplémentaires.

6. Procédé selon l'une des revendications précédentes, dans lequel le composant (b) est présent dans le système de liant en une quantité de 1 à 20 % en poids, de préférence de 3 à 8 % en poids, plus préférentiellement de 4 à 7 % en poids.

7. Procédé selon l'une des revendications précédentes, dans lequel le système de liant comprend au moins le(s) composant(s) (a) contenant des groupes isocyanate en une quantité totale d'au moins 80 % en poids, de préférence d'au moins 90 % en poids ou de 100 % en poids, par rapport à tous les composants polymérisables du système de liant.

8. Procédé selon l'une des revendications précédentes, dans lequel la molarité des équivalents ammonium du composant (b) est d'au moins 6 moles, respectivement d'au moins 7 moles ou d'au moins 8 moles par rapport à une solution du composant (b) dans la quantité d'eau utilisée.

9. Procédé selon l'une des revendications précédentes, dans lequel la quantité dudit au moins un composant (a) contenant des groupes isocyanate par rapport au matériau contenant de la lignocellulose est de 1 à 10 % en poids, de préférence de 2 à 8 % en poids, plus préférentiellement de 3 à 8 % en poids.

10. Procédé selon la revendication 1, dans lequel le durcissement thermique, thermomécanique ou mécanique du mélange à l'étape (iii) est réalisé dans une presse à chaud à une température de 80 à 220 °C.

11. Procédé selon la revendication 1, dans lequel le durcissement thermique, thermomécanique ou mécanique du mélange à l'étape (iii) est réalisé avec des temps de pressage de moins de 12 s/mm, de préférence de moins de 8 s/mm dans une presse à chaud à une température de 100 à 180 °C.

12. Procédé selon l'une des revendications précédentes, dans lequel le composant contenant des groupes isocyanate est un composant di- ou polyisocyanate, de préférence du diphénylméthane diisocyanate ; et/ou
dans lequel le matériau à base de bois est choisi dans le groupe constitué par les panneaux de fibres, les panneaux de particules, les matériaux d'isolation, les panneaux isolants, les panneaux de lamelles orientées, les panneaux de lamelles non orientées, les placages, les contreplaqués, les matériaux composites à base de bois et les produits en bois d'ingénierie, en particulier les matériaux à base de bois étant des matériaux à base de bois de densité moyenne ayant une densité de 550 kg/m³ à 800 kg/m³, des matériaux à base de bois ultralégers ayant une densité inférieure à 550 kg/m³ et des matériaux à base de bois de haute densité ayant une densité supérieure à 800 kg/m³.

13. Procédé selon l'une des revendications précédentes, dans lequel le composant contenant des groupes isocyanate et ledit au moins un composant (b) du système de liant sont pulvérisés séparément au moyen de buses, et/ou dans lequel
à l'étape (i), un ou plusieurs additifs sont mélangés au matériau contenant de la lignocellulose avant qu'il ne soit mis en contact avec le système de liant.

14. Procédé de fabrication de contreplaqués, comprenant les étapes de :
(i) fourniture d'un matériau contenant de la lignocellulose, contenant 5 à 40 % en poids de lignines et 15 à 95 % en poids d'holocellulose ;
(ii) mise en contact du matériau de l'étape (i) avec un système de liant comprenant au moins les composants suivants :
- au moins un composant (a) contenant des groupes isocyanate,
- au moins un composant (b) choisi dans le groupe constitué par l'acétate d'ammonium, (NH₄)H₂PO₄ (dihydrogénophosphate d'ammonium), (NH₄)₂HPO₄ (hydrogénophosphate de diammonium), (NH₄)₃PO₄ (phosphate d'ammonium), [NH₄PO₃]ₙ (polyphosphate d'ammonium) et leurs mélanges, dans lequel le système de liant contient de l'eau, et dans lequel le composant (b) est présent, par rapport à ses équivalents ammonium, dans une solution au moins 2,0 molaire dans la quantité d'eau utilisée, et dans lequel le composant (b) se dissout complètement à 20 °C dans la quantité d'eau utilisée et est réglé à un pH supérieur à 7 ; et
dans lequel la quantité d'eau est de 7 à 15 % en poids par rapport à la quantité totale du composant (a) contenant des groupes isocyanate ;
dans lequel le système de liant contient ledit au moins un composant (a) contenant des groupes isocyanate en une quantité d'au moins 50 % en poids par rapport à tous les composants polymérisables du système de liant ;
pour obtenir un mélange ; et
(iii) durcissement thermique, thermomécanique ou mécanique du mélange de l'étape (ii) pour obtenir un matériau à base de bois.

15. Matériau à base de bois, fabriqué ou pouvant être fabriqué par un procédé selon l'une des revendications 1 à 14.
